(19) Europäisches Patentamt
European Patent Office
Office européen des brevets

(11) **EP 3 843 470 A1**

(12) **EUROPEAN PATENT APPLICATION**
published in accordance with Art. 153(4) EPC

(43) Date of publication:
**30.06.2021 Bulletin 2021/26**

(51) Int Cl.:
**H04W 72/04** (2009.01)    **H04W 4/44** (2018.01)

(21) Application number: **18931126.9**

(22) Date of filing: **20.08.2018**

(86) International application number:
**PCT/JP2018/030713**

(87) International publication number:
**WO 2020/039488 (27.02.2020 Gazette 2020/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **FUJITSU LIMITED
Kanagawa 211-8588 (JP)**
(72) Inventor: **WU, Jianming
Kawasaki-shi, Kanagawa 211-8588 (JP)**

(74) Representative: **Haseltine Lake Kempner LLP
Cheapside House
138 Cheapside
London
EC2V 6BJ (GB)**

(54) **COMMUNICATION DEVICE AND COMMUNICATION SYSTEM**

(57)    A communication device includes, a subgroup manager which, among a total of $N \times N_T$ resources of a control channel, the $N \times N_T$ resources having N resources in a frequency axis direction and $N_T$ resources in a time axis direction, allocates N frequency axis direction resources in first place in the time axis direction to respective communication devices as resources of a first control channel, and allocates second to $N_T$-th time axis direction resources in first place in the frequency axis direction to the respective communication devices as resources of a second control channel, allocates second to N-th frequency axis direction resources in second place in the time axis direction to respective other communication devices as resources of the first control channel.

FIG. 16

**Description**

TECHNICAL FIELD

The present invention relates to a communication device and a communication system.

BACKGROUND ART

In current networks, traffic from mobile terminals (smartphones and feature phones) takes up the majority of network resources. Moreover, traffic used by mobile terminals is expected to expand further in the future.

Meanwhile, with the development of IoT (Internet of things) services (for instance, transportation systems, smart meters, and systems for monitoring devices and so on), there is a need to deal with services that have to meet various needed conditions. Therefore, in the communication standard for fifth generation mobile communication (5G or NR (New Radio)), in addition to the standard technology (NPL 2 to 12, for instance) of 4G (fourth generation mobile communication), techniques for realizing further increases in data rate and capacity and further reductions in latency are desired.

Note that with regard to the fifth generation communication standard, technical examinations are being undertaken by working groups (TSG-RAN WG1, TSG-RAN WG2, and so on, for instance) of the 3GPP (Third Generation Partnership Project) (NPL 13 to 40).

As described above, in order to deal with diverse services, in 5G, support for a great number of use cases classified into eMBB (Enhanced Mobile Broad Band), Massive MTC (Machine Type Communications), and URLLC (Ultra-Reliable and Low Latency Communication) is envisaged.

Further, the working groups of the 3GPP have also discussed V2X (Vehicle to Everything) communication. V2X is the generic name for V2V (Vehicle to Vehicle) communication, i.e. communication between automobiles, V2P (Vehicle to Pedestrian) communication, i.e. communication between an automobile and a pedestrian, V2I (Vehicle to Infrastructure) communication, i.e. communication between an automobile and road infrastructure, e.g., a road sign, and so on, using sidelink channels, for instance. Definitions relating to V2X are described in NPL 1, for instance.

With regard to resource arrangements in V2X, an arrangement method in which a control channel and a data channel are adjacent and an arrangement method in which the control channel and the data channel are not adjacent are being examined.

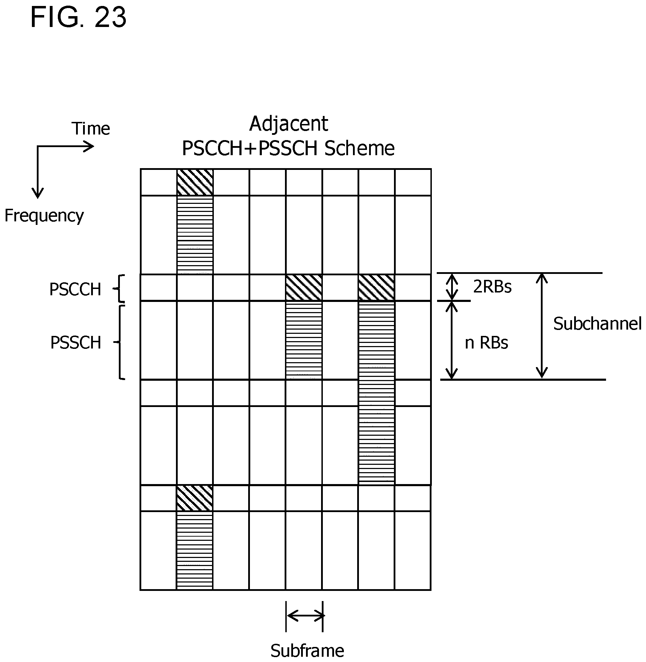

Fig. 23 is a view illustrating an example of a resource arrangement in a case where a PSCCH (Physical Sidelink Control CHannel) serving as a control channel and a PSSCH serving as a data channel are adjacent. In Fig. 23, the horizontal axis represents a time axis direction, and the vertical axis represents a frequency axis direction. In the example of Fig. 23, the frequency axis direction has four subchannels. In each subchannel, a PSCCH of two RBs (Resource Blocks) and a PSSCH of n (where n is an integer of three or more) RBs are disposed adjacent to each other. As illustrated in Fig. 23, the PSCCH resources indicated by diagonal lines and PSSCH resources indicated by horizontal lines are used for actual transmission. SCI (Sidelink Control Information) is mapped onto the PSCCH resources, the SCI including information such as the data modulation method and the code rate of the corresponding PSSCH.

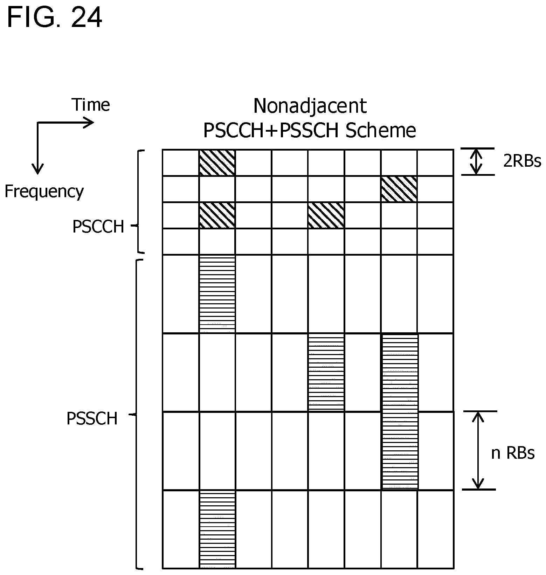

Fig. 24 is a view illustrating an example of a resource arrangement in a case where the PSCCH and the PSSCH are not adjacent. Likewise in Fig. 24, PSCCH resources indicated by diagonal lines and PSSCH resources indicated by horizontal lines are used for actual transmission. As illustrated in Fig. 24, the respective resources of the PSCCH and the PSSCH are not adjacent. SCI relating to the corresponding PSSCH is mapped onto the PSCCH resources.

As a method for allocating these resources, a method in which a mobile communication system performs intensive control or a method in which respective terminal devices implementing V2X perform autonomous control, for instance, may be used. The method in which the mobile communication system performs intensive control can be applied when the terminal devices implementing V2X are within the coverage range of the mobile communication system, and is also known as mode 3. The method in which the respective terminal devices perform autonomous control, on the other hand, can be applied even when the terminal devices are not within the coverage range of the mobile communication system, and is also known as mode 4. In mode 4, communication is not performed between the terminal device used to allocate the resources and the mobile communication system, and therefore transmission delays occurring when transmission data are generated in the terminal device can be shortened, with the result that strict latency necessity can be satisfied.

In mode 4, each terminal device senses the frequency band used for V2X, and when transmission data are generated, the terminal device selects a resource to be used for to transmit the data on the basis of the sensing result by excluding resources that are highly likely to be in use by another terminal device.

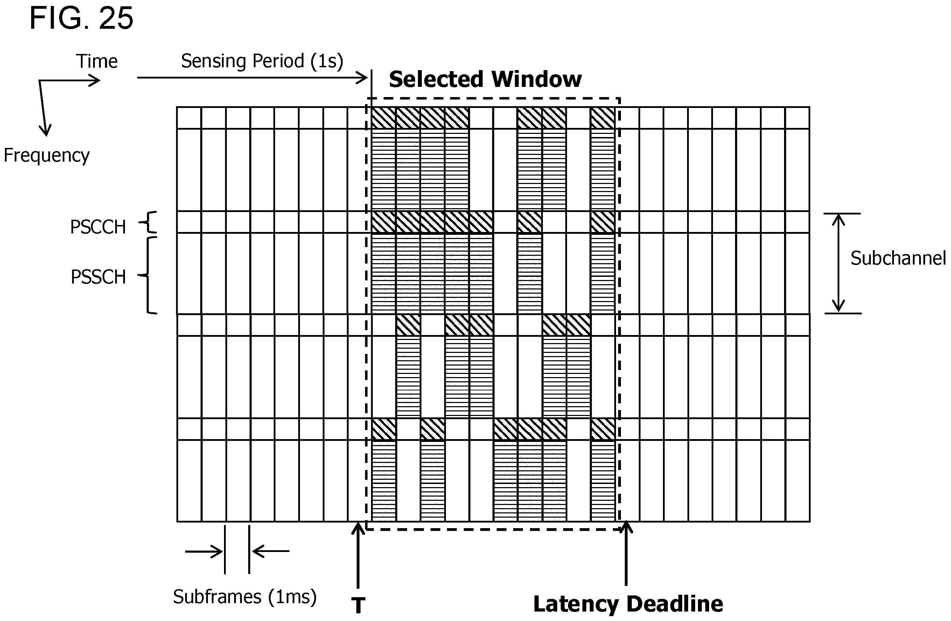

Fig. 25 is a view illustrating an example of resource selection. As illustrated in Fig. 25, when transmission data from a certain terminal device is generated at a time T, the terminal device sets a selected window of a time width corresponding to an allowable latency deadline of the transmission data. Then, on the basis of sensing results acquired up to the time T, the terminal device excludes resources that are highly likely to be in use by other terminal devices from the selected window. In Fig. 25, for instance, resources indicated by diagonal lines and horizontal lines are excluded. The terminal device then selects any of the remaining resources not excluded from the selected window and transmits the transmission data by mapping the data onto the selected resource.

CITATION LIST

NON-PATENT LITERATURE

NPL 1: 3GPP TS 22.186 V15.2.0(2017-09)
NPL2:3GPP TS 36.211 V15.1.0(2018-03)
NPL3:3GPP TS 36.212 V15.1.0(2018-03)
NPL4:3GPP TS 36.213 V15.1.0(2018-03)
NPL5:3GPP TS 36.300 V15.1.0(2018-03)
NPL6:3GPP TS 36.321 V15.1.0(2018-03)
NPL7:3GPP TS 36.322 V15.0.1(2018-04)
NPL 8: 3GPP TS 36.323 V14.5.0(2017-12)
NPL 9: 3GPP TS 36.331 V15.1.0(2018-03)
NPL 10: 3GPP TS 36.413 V15.1.0(2018-03)
NPL 11: 3GPP TS 36.423 V15.1.0(2018-03)
NPL 12: 3GPP TS 36.425 V14.1.0(2018-03)
NPL 13: 3GPP TS 37.340 V15.1.0(2018-03)
NPL 14: 3GPP TS 38.201 V15.0.0(2017-12)
NPL 15: 3GPP TS 38.202 V15.1.0(2018-03)
NPL 16: 3GPP TS 38.211 V15.1.0(2018-03)
NPL 17: 3GPP TS 38.212 V15.1.1(2018-04)
NPL 18: 3GPP TS 38.213 V15.1.0(2018-0312)
NPL 19: 3GPP TS 38.214 V15.1.0(2018-03)
NPL 20: 3GPP TS 38.215 V15.1.0(2018-03)
NPL 21: 3GPP TS 38.300 V15.1.0(2018-03)
NPL 22: 3GPP TS 38.321 V15.1.0(2018-03)
NPL 23: 3GPP TS 38.322 V15.1.0(2018-03)
NPL 24: 3GPP TS 38.323 V15.1.0(2018-03)
NPL 25: 3GPP TS 38.331 V15.1.0(2018-03)
NPL 26: 3GPP TS 38.401 V15.1.0(2018-03)
NPL 27: 3GPP TS 38.410 V0.9.0(2018-04)
NPL 28: 3GPP TS 38.413 V0.8.0(2018-04)
NPL 29: 3GPP TS 38.420 V0.8.0(2018-04)
NPL 30: 3GPP TS 38.423 V0.8.0(2018-04)
NPL 31: 3GPP TS 38.470 V15.1.0(2018-03)
NPL 32: 3GPP TS 38.473 V15.1.1(2018-04)
NPL 33: 3GPP TR 38.801 V14.0.0(2017-04)
NPL 34: 3GPP TR 38.802 V14.2.0(2017-09)
NPL 35: 3GPP TR 38.803 V14.2.0(2017-09)
NPL 36: 3GPP TR 38.804 V14.0.0(2017-03)
NPL 37: 3GPP TR 38.900 V14.3.1(2017-07)
NPL 38: 3GPP TR 38.912 V14.1.0(2017-06)
NPL 39: 3GPP TR 38.913 V14.3.0(2017-06)
NPL 40: 3GPP TR 37.885 V15.0.0 (2018-06)
NPL 41: 3GPP TR 22.886 V15.1.0 (2017-03)
NPL 42: 3GPP TSG RAN #80, RP-180602, "Status Report for RAN WG1 to TSG-RAN #80", La Jolla, USA 11h-14th June, 2018.
NPL 43: 3GPP TSG RAN #80, RP-181429, "New SID: Study on NR V2X", La Jolla, USA 11h-14th June, 2018.
NPL 44: R. M. Masegosa, and J. Gozalvez, "LTE-V for Sidelink 5G V2X Vehicular Communications: A New 5G Technology for Short-Range Vehicle-to-Everything Communications", IEEE Vehicular Technology Magazine, Pages: 30-39, Volume-2, Issue-4, December 2017.

SUMMARY OF INVENTION

PROBLEMS TO BE SOLVED BY THE INVENTION

In NPL 40, noted above, a PRR (Packet reception ratio) is defined. In the case of Type 1, for instance, the PRR is expressed by X/Y in relation to a transmission packet, where Y is the number of terminal devices (or vehicles) positioned within a range having a distance (a, b) from the transmission packet and X is the number of terminal devices (or vehicles), among Y, that successfully receive the transmission packet. Alternatively, in the case of Type 2, for instance, the PRR is expressed by S/Z, where Z is the number of receiving terminal devices and S is the number of terminal devices, among Z, that achieve reception successfully. The PRR expresses the number of terminal devices that achieve reception successfully among receiving terminal devices, for instance.

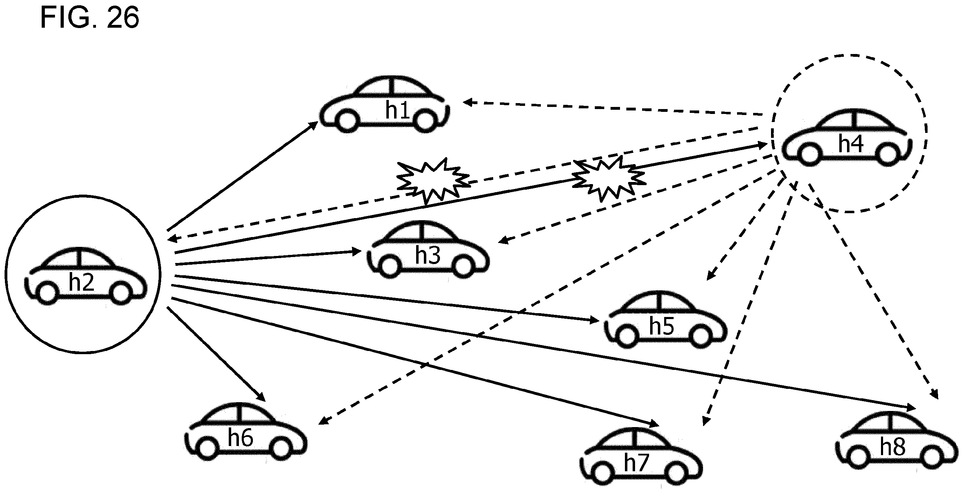

Fig. 26 is a view illustrating an example of communication performed between vehicles h1 to h8 having terminal devices. Fig. 26 depicts an example in which the vehicle h2 transmits packet data (also referred to hereafter as a "packet") #1 to the other vehicles h1 and h3 to h8, and the vehicle h4 also transmits a packet #2 to the other vehicles h1 to h3 and h5 to h8. In this case, due to Half Duplex limitations, the vehicle h2 is in a transmission mode and the vehicle h4 is also in the transmission mode, and therefore the packet #1 transmitted from the vehicle h2 is not able to be received normally by the vehicle h4. Likewise, the packet #2 transmitted from the vehicle h4 is not able to be received normally by the vehicle h2. In this case, PRR = 6/7.

As also described in NPL 1, in 5G, low latency and ultra-high reliability are needed with respect to V2X communication. In the example of Fig. 26, the PRR is 6/7, but when the PRR takes this numerical value, it may be impossible to satisfy these necessities.

The technology disclosed herein has been designed in consideration of the circumstances described above, and an object thereof is to improve the packet reception ratio.

MEANS FOR SOLVING THE PROBLEMS

A communication device includes, a subgroup manager which, among a total of $N \times N_T$ resources of a control channel, the $N \times N_T$ resources having N (where N is an integer of 1 or more) resources in a frequency axis direction and $N_T$ (where $N_T$ is an integer of 2 or more) resources in a time axis direction, allocates N frequency axis direction resources in first place in the time axis direction to respective communication devices as resources of a first control channel, allocates second to $N_T$-th time axis direction resources in first place in the frequency axis direction to the respective communication devices as resources of a second control channel, allocates second to N-th frequency axis direction resources in second place in the time axis direction to respective other communication devices as resources of the first control channel, and allocates third to $N_T$-th time axis direction resources in second place in the frequency axis direction to the respective other communication devices as resources of the second control channel, and by repeating this operation, allocates the resources of the first and second control channels to a plurality of communication devices, and a transmission controller that transmits a control signal by using a resource of the first control channel and resends the control signal by using a resource of the second control channel.

ADVANTAGEOUS EFFECTS OF THE INVENTION

The packet reception ratio can be improved.

BRIEF DESCRIPTION OF DRAWINGS

Fig. 1 is a view illustrating an example configuration of a wireless communication system
Fig. 2 is a view illustrating an example configuration of the terminal 100.
Fig. 3 is a view illustrating an example of PSCCH allocation.
Fig. 4 is a view illustrating an example of a correspondence relationship between the PSCCH and the PSSCH.
Fig. 5A is a view illustrating an example of PSCCH resource allocation in a case where N = 2.
Fig. 5B is a view illustrating an example of PSCCH allocation in a case where N = 3.
Fig. 6 is a view illustrating an example of PSCCH resource allocation in a case where N = 4.
Figs. 7A and 7B are views respectively illustrating an example of PSCCH resource allocation and an example of randomization.
Figs. 8A and 8B are views illustrating examples of randomization.
Fig. 9 is a view illustrating an example of resource allocation in a case where high-priority data are transmitted.

Fig. 10 is a view illustrating an example of resource allocation in a case where high-priority data are transmitted.

Fig. 11 is a view illustrating an example of resource allocation in a case where high-priority data are transmitted.

Fig. 12 is a view illustrating an example of resource allocation in a case where high-priority data are transmitted.

Fig. 13 is a view illustrating an example of resource allocation in a case where high-priority data are transmitted.

Fig. 14 is a view illustrating an example of resource allocation in a case where high-priority data are transmitted.

Figs. 15A and 15B are views respectively illustrating an example of an arrangement of a PCRLICH and an example of information transmitted using the PCRLICH.

Fig. 16 is a view illustrating an example of allocation to a resource pool of terminals included in a V2X group.

Figs. 17A and 17B are views illustrating examples of PSCCH allocation in the evenly allocation manner.

Figs. 18A and 18B are views illustrating examples of PSCCH allocation in the non-uniform spacing allocation manner.

Fig. 19 is a flowchart illustrating an example operation of PSCCH resource allocation.

Fig. 20 is a flowchart illustrating an example operation performed to transmit high-priority data.

Fig. 21 is a view illustrating an example of PRR simulation results.

Fig. 22 is a view illustrating an example of PRR simulation results.

Fig. 23 is a view illustrating an example of an arrangement of PSCCH and PSSCH resources.

Fig. 24 is a view illustrating an example of an arrangement of PSCCH and PSSCH resources.

Fig. 25 is a view illustrating an example of resource selection according to mode 4.

Fig. 26 is a view illustrating an example of vehicle to vehicle communication.

## DESCRIPTION OF EMBODIMENTS

Embodiments will be described in detail below with reference to the figures. The problems and embodiments described in this description are examples and do not limit the scope of rights of this application. More specifically, even when different expressions are used in the description, as long as the expressions are technically equivalent, the technology of the present application can be applied even to these different expressions, and the scope of rights is not limited thereby. Moreover, the embodiments can be combined as appropriate within a scope that does not contradict the processing content.

Furthermore, as regards the terminology used in this description and the technical content described therein, the terminology and technical content described in specifications and contributed articles as communication-related standards by the 3GPP and so on may be used as appropriate. Examples of such specifications include 3GPP TS 38.211 V15.1.0 (2018-03) and so on.

Note that 3GPP specifications are updated as needed. Therefore, the latest specifications at the time of filing of this application may be used as the aforesaid specifications. The terminology and technical content described in the latest specifications may be used as appropriate in this description.

Embodiments of the communication device and the communication system disclosed in this application will be described in detail below on the basis of the figures. Note that the embodiments described below do not limit the technology disclosed herein.

[First embodiment]

<1. Example configuration of wireless communication system>

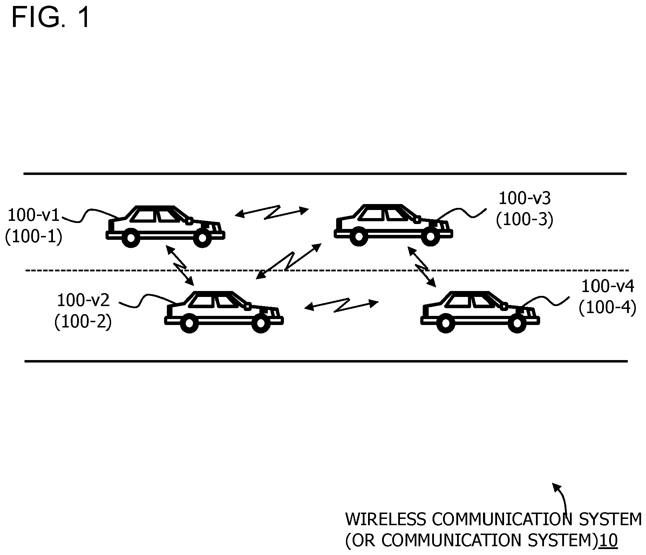

Fig. 1 is a view illustrating an example configuration of a wireless communication system 10 according to a first embodiment.

The wireless communication system (or the communication system; also referred to hereafter as "the wireless communication system") 10 includes a plurality of terminal devices 100-1 to 100-4. The terminal devices 100-1 to 100-4 are respectively provided in vehicles 100-v1 to 100-v4.

The terminal devices (or the communication devices; also referred to hereafter as "the terminals") 100-1 to 100-4 are communication devices that are capable of wireless communication, e.g., as feature phones, smartphones, personal computers, tablet terminals, or game devices, for instance.

Further, the terminals 100-1 to 100-4 are capable of performing wireless communication through V2X communication, for instance. As noted above, for instance, V2X is the generic name for V2V, V2P, V2I, and so on. Therefore, in Fig. 1, for instance, when the terminal 100-1 is provided in the vehicle 100-v1, the terminal 100-2 serving as the communication partner may be carried by a pedestrian or provided on a road sign rather than being installed in the vehicle 100-v2. Note, however, that in the following description, it is assumed that the terminals 100-1 to 100-4 are provided in the vehicles 100-v1 to 100-v4.

Furthermore, the terminals 100-1 to 100-4 are capable of performing wireless communication using mode 4 of V2X communication, for instance. As noted above, for instance, mode 4 is a method with which the terminals 100-1 to 100-4 can control wireless communication autonomously even when the terminals 100-1 to 100-4 are not within the coverage range of a mobile communication system.

Note that when the terminals 100-1 to 100-4 transmit data or the like, the terminals 100-1 to 100-4 cannot receive data or the like transmitted from another terminal, and when the terminals 100-1 to 100-4 receive data or the like from another terminal, the terminals 100-1 to 100-4 cannot transmit data or the like to another terminal. In other words, the terminals 100-1 to 100-4 cannot enter a reception mode while in the transmission mode and cannot enter the transmission mode while in the reception mode. These terminals 100-1 to 100-4 may be referred to as Half-duplex (mode) terminals, for instance.

Note that Fig. 1 depicts an example in which the four terminals 100-1 to 100-4 are included in the wireless communication system 10. The number of terminals 100-1 to 100-4 included in the wireless communication system 10 may be two, three, five, or more.

Unless specified otherwise, the terminals 100-1 to 100-4 will be referred to hereafter as the terminal 100 or the terminals 100.

<2. Example configuration of terminal device>

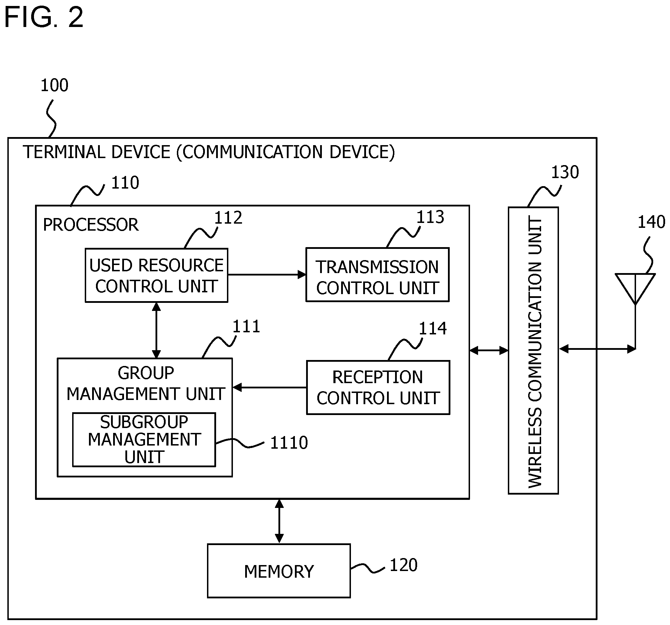

Fig. 2 is a view illustrating an example configuration of the terminal 100.

The terminal 100 includes a processor 110, a memory 120, a wireless communication unit (communicator) 130, and an antenna 140.

The processor 110 is a CPU (Central Processing Unit), a DSP (Digital Signal Processor), an FPGA (Field Programmable Gate Array), or the like, for instance, and performs overall control of the terminal 100. The processor 110 includes a group management unit (manager) 111, a used resource control unit (controller) 112, a transmission control unit (controller) 113, and a reception control unit (controller) 114.

The group management unit 111 manages a group to which the terminals 100 belong. More specifically, the group management unit 111 controls admission to and withdrawal from the group of the terminals 100 and manages identification information and used resources of the terminals 100 belonging to the same group. Note that the group managed by the group management unit 111 may also be referred to as a V2X group, for instance.

The group management unit 111 also manages which terminal 100 is to serve as a cluster header (CH), this being determined dynamically for each subframe within the group. The CH is a representative terminal (or a representative communication device) for each subframe and reorders the resources in each subframe as needed. Hereafter, the terminal serving as the CH may also be referred to as the representative terminal, for instance. When a packet (a sporadic packet) to be transmitted with high priority (or transmitted suddenly) is generated, the terminal 100 can transmit the packet quickly by using a resource reordered by the representative terminal. This will be described in detail in an example operation.

Furthermore, when the terminal 100 is not the CH and a packet to be transmitted with high priority is generated, the group management unit 111 generates a transmission request for high-priority transmission and instructs the used resource control unit 112 to transmit the generated transmission request. When, on the other hand, the terminal 100 is the CH and the terminal 100 receives a transmission request from another terminal 100 via the reception control unit 114, the group management unit 111 reorders the resources that are used by the respective terminals 100 as a control channel (a PSCCH). The group management unit 111 then generates reordering information indicating the reordered resources and instructs the used resource control unit 112 to transmit the generated reordering information.

The group management unit 111 includes a subgroup management unit (manager) 1110.

The subgroup management unit 1110 manages a subgroup to which the terminals 100 belong. More specifically, for instance, the subgroup management unit 1110 controls admission to and withdrawal from the subgroup of the terminals 100 and manages identification information and used resources of the terminals 100 belonging to the same subgroup.

Note that the subgroup managed by the subgroup management unit 1110 is a subgroup included in the V2X group, for instance. In other words, the subgroup management unit 1110 manages the resources of the terminals 100 included in the subgroup and allocates a control channel (a PSCCH) and a data channel (a PSSCH) to the terminals 100 included in the subgroup, for instance.

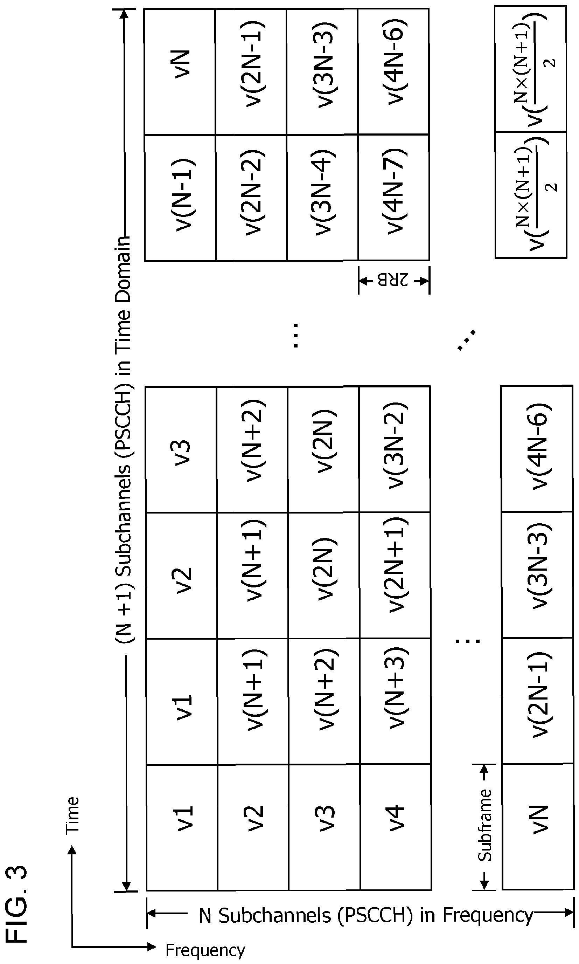

Fig. 3 is a view illustrating an example of PSCCH allocation. As illustrated in Fig. 3, identification information from v1 to v(N × (N + 1)/2) (where N, for instance, expresses a number of PSCCH subchannels in the frequency axis direction and is an integer of 1 or more) is allocated to the PSCCH resources. The identification information represents the identification information of each of the terminals 100, for instance. For instance, v1 is a resource of the terminal 100-1, v2 is a resource of the terminal 100-2, and so on. The subgroup management unit 1110 allocates the PSCCH resources depicted in Fig. 3 to the terminals 100 included in the subgroup using the identification information of each of the terminals 100. Further, the subgroup management unit 1110 allocates a resource in the same subframe as the PSCCH resource allocated to the terminal 100 as a PSSCH resource for the terminal 100. The subchannel to which the data of each terminal 100 are to be mapped is indicated by SCI (Sidelink Control Information) included in a control signal.

For instance, the subgroup management unit 1110 may generate the SCI, generate a control signal including the SCI, and output the generated control signal to the used resource control unit 112.

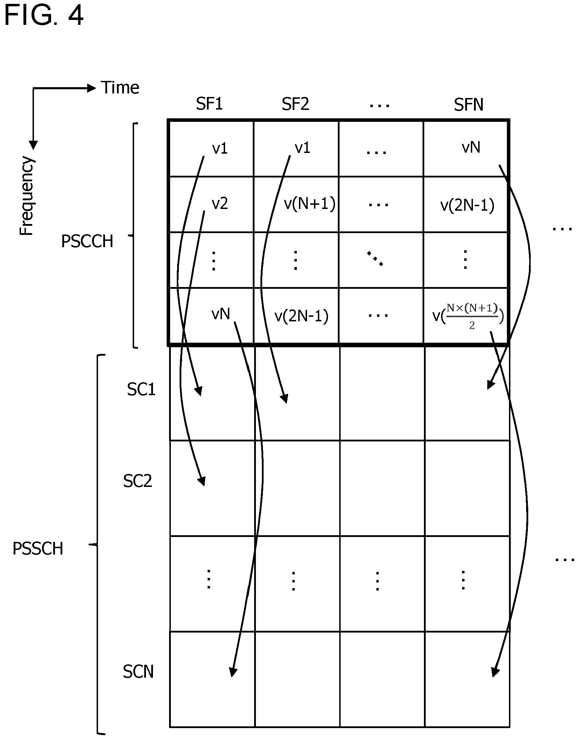

Fig. 4 is a view illustrating an example of a correspondence relationship between the PSCCH and the PSSCH. As illustrated in Fig. 4, for instance, the subgroup management unit 1110, when allocating the resource indicated by v1 to the terminal 100-1 as a PSCCH resource, allocates one of the resources of the PSCCH (in the example of Fig. 4, SC1 (subchannel 1)) belonging to the same subframe as v1 as a PSSCH resource. Note that Figs. 3 and 4 will be described in detail below.

Returning to Fig. 2, the subgroup management unit 1110 outputs an allocation result to the used resource control unit 112 and instructs the used resource control unit 112 to transmit a control signal using the control channel or to transmit data using the data channel.

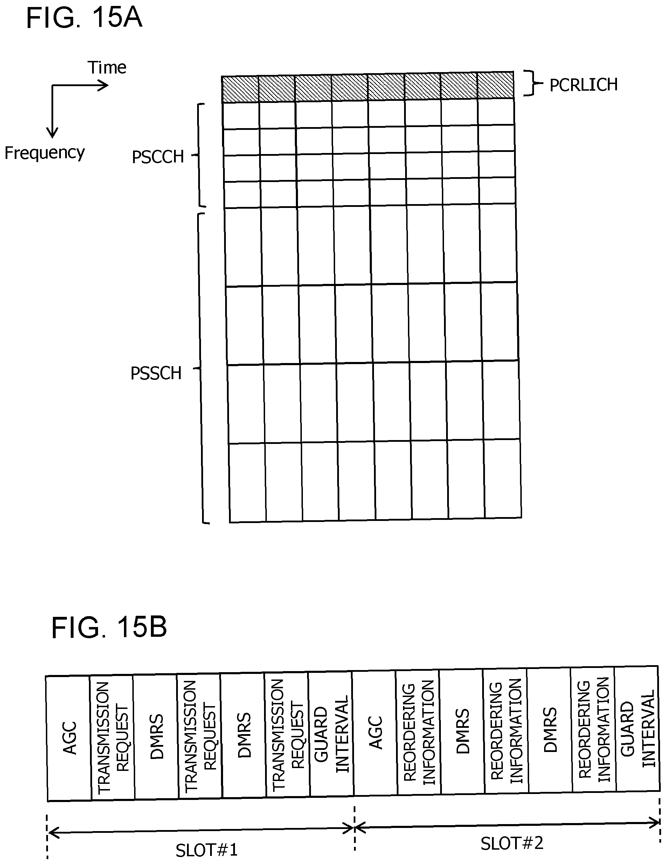

The used resource control unit 112 controls the resources used by the terminal 100 to transmit control signals and data. More specifically, the used resource control unit 112 executes control so that in response to an instruction relating to a packet transmission request or a reordering request output from the group management unit 111, the transmission request or the reordering request is transmitted using a resource of a PSCRLICH (Physical Control Resource Location Indication CHannel) provided in a predetermined frequency band. The PSCRLICH is a different channel to the PSCCH and the PSSCH, for instance, and Fig. 15A, for instance, illustrates an example of a channel arrangement. This will be described in detail below.

Returning to Fig. 2, the used resource control unit 112 also controls the control channel resources and data channel resources in accordance with the allocation result output from the subgroup management unit 1110. More specifically, for instance, the used resource control unit 112 receives the allocation result illustrated in Figs. 3 and 4 and, in accordance with the allocation result, controls transmission of a control signal using a predetermined PSCCH resource (v1, v2, or the like) and transmission of data using a predetermined PSSCH resource.

The transmission control unit 113 controls the wireless communication unit 130 so that control signals and data are transmitted using the resources controlled by the used resource control unit 112. More specifically, the transmission control unit 113 performs the following processing. The transmission control unit 113 receives data from an application processing unit or the like provided in the processor 110 and implements error correction and encoding processing (also referred to hereafter as "encoding processing"), modulation processing, and the like on the received data. Further, the transmission control unit 113 implements encoding processing, modulation processing, and the like on a control signal received from the subgroup management unit 1110 or a transmission request, reordering information, or the like received from the group management unit 111 via the used resource control unit 112. The transmission control unit 113 maps the control signal onto a PSCCH resource, the data onto a PSSCH resource, and the transmission request, the reordering information, or the like onto a PSCRLICH resource. The transmission control unit 113 then transmits a transmission signal acquired as a result of the mapping by multicasting (or grouping) via the wireless communication unit 130.

The reception control unit 114 implements demodulation processing, error correction and decoding processing (also referred to hereafter as "decoding processing"), and the like on a reception signal received from another terminal 100. More specifically, the reception control unit 114 extracts the control signal by implementing demodulation processing and the like on a reception signal mapped onto the PSCCH. Further, the reception control unit 114 extracts the data by implementing demodulation processing and the like on a reception signal mapped onto the PSSCH. Furthermore, the reception control unit 114 extracts the transmission request, reordering information, or the like by implementing demodulation processing, and so on, on a reception signal mapped onto the PSCRLICH. The reception control unit 114 outputs the extracted data or control signal to the application processing unit or the like provided in the processor 110. Further, having extracted a transmission request, the reception control unit 114 outputs the extracted transmission request to the group management unit 111 in order to request reordering of the resources in accordance with the transmission request.

The memory 120 is a ROM (Read Only Memory), a RAM (Random Access Memory), or the like, for instance. The memory 120 stores a program, for instance, and the program is read by the processor 110 and executed in the processor 110. The functions of the group management unit 111, the subgroup management unit 1110, the used resource control unit 112, the transmission control unit 113, and the reception control unit 114 can be realized by executing the program, for instance. The memory 120 also stores information used when the processor 110 executes processing, and so on, for instance.

The wireless communication unit 130 implements D/A (Digital to Analog) conversion processing, frequency conversion processing (up-conversion) from a base band to a wireless band, and the like on the transmission signal output from the transmission control unit 113. The wireless communication unit 130 outputs the wireless signal converted to the wireless band to the antenna 140.

Further, the wireless communication unit 130 implements frequency conversion processing (down-conversion) to the base band, A/D (Analog to Digital) conversion processing, and the like on the wireless signal output from the antenna 140. The wireless communication unit 130 outputs a reception signal to the reception control unit 114.

The antenna 140 transmits the wireless signal output from the wireless communication unit 130 to another terminal 100. Further, the antenna 140 receives a wireless signal transmitted from another terminal 100 and outputs the received wireless signal to the reception control unit 114.

<3. Example of PSCCH resource allocation>

Fig. 3 is a view illustrating an example of PSCCH resource allocation.

In Fig. 3, the horizontal axis represents the time axis direction, and the vertical axis represents the frequency axis direction. In Fig. 3, N PSCCH resources, N being the number of subchannels, are provided in the frequency axis direction. Further, $N_T$ (where $N_T$ is an integer of 2 or more) PSCCH resources, which are resources corresponding to the subchannels in the frequency axis direction, are provided in the time axis direction. Hence, the number of PSCCH resources in Fig. 3 is $N \times N_T$. For instance, one resource (or resource region; also referred to hereafter as a "resource") serves as one subchannel in the frequency axis direction and a time period corresponding to one subchannel in the time axis direction.

Note that in the example of Fig. 3, the unit of a single resource in the time axis direction is one subframe. The time axis direction unit may also be one slot or one symbol, for instance. Hereafter, one subframe will be described as the time axis direction unit of a single resource. Further, Fig. 3 depicts an example in which $N_T = N + 1$. An example in which $N_T = N + 1$ will be described below.

The resources illustrated in Fig. 3 respectively serve as transmission resources of the PSCCH, which are allocated to the respective terminals 100. Further, v1 to v(N $\times$ (N + 1)/2), depicted on the respective resources, serve as the identification information of the terminals 100, for instance. As described above, the terminal 100-1 is v1, the terminal 100-2 is v2, and so on, for instance.

Hereafter, the terminal 100 to which the identification information v1 is applied may be referred to as a terminal v1, and the terminal 100 to which the identification information v2 is applied may be referred to as a terminal v2. Accordingly, the terminal 100 to which the identification information v(N $\times$ (N + 1)/2) is applied may be referred to as a terminal v(N $\times$ (N + 1)/2).

As illustrated in Fig. 3, the terminal 100 allocates the N resources from the first to the N-th frequency axis direction resources in first place in the time axis direction respectively to the terminals 100 from the terminal v1 to the terminal vN. Further, the terminal 100 allocates the N resources from the second to the (N + 1)th time axis direction resources in first place in the frequency axis direction respectively to the terminals 100 from the terminal v1 to the terminal vN.

Furthermore, the terminal 100 allocates the (N - 1) resources from the second to the N-th frequency axis direction resources in second place in the time axis direction respectively to the terminals 100 from a terminal v(N + 1) to a terminal v(2N - 1). Moreover, the terminal 100 allocates the (N-1) resources from the third to the (N + 1)th time axis direction resources in second place in the frequency axis direction respectively to the terminals from the terminal v(N + 1) to the terminal v(2N - 1).

Thereafter, the terminal 100 repeats this operation with respect to the remaining resources. Finally, the terminal 100 allocates the N-th frequency axis direction resource in N-th place in the time axis direction and the N-th frequency axis direction resource in (N + 1)th place in the time axis direction to the terminal v(N $\times$ (N + 1)/2).

As illustrated in Fig. 3, two PSCCH resources are allocated to each terminal v1 to v(N $\times$ (N + 1)/2). For instance, the N PSCCH resources from the first to the N-th frequency axis direction resources in first place in the time axis direction are initial resources for the control signal, while the second to the (N + 1)th time axis direction PSCCH resources in first place in the frequency axis direction are repetition resources for the control signal. Further, for instance, the second to the N-th frequency axis direction resources in second place in the time axis direction are initial resources for the control signal, while the PSCCH resources from the third to the (N + 1)th time axis direction resources in second place in the frequency axis direction are repetition resources for the control signal.

Hence, the terminal v1 transmits the control signal using the first frequency axis direction resource in first place in the time axis direction, and resends the control signal using the first frequency axis direction resource in second place in the time axis direction. Since there are two opportunities to transmit the control signal, the probability that the reception-side terminal 100 will receive the data transmitted from the transmission-side terminal 100, for instance, can be improved in comparison with a case where there is only one transmission opportunity.

Note that Fig. 3 depicts an example arrangement of PSCCH resources according to the method (Fig. 24, for instance) in which the PSCCH and the PSSCH are not adjacent. However, this arrangement can also be applied to the method (Fig. 23, for instance) in which the PSCCH and the PSSCH are adjacent. In the latter case, it may be assumed that Fig. 3 illustrates a grouping of PSCCHs, for instance. Alternatively, for instance, it may be assumed that PSSCH resources are inserted respectively between the PSCCH resources, but that the PSSCH resources are not depicted in Fig. 3.

Further, the example illustrated in Fig. 3 is a method according to mode 4 of V2X communication, for instance. Therefore, the PSCCH resources depicted in Fig. 3 may be considered as a grouping of the remaining resources that have not been excluded from the selected window as a result of sensing, for instance.

Fig. 4 is a view illustrating an example of a relationship between the PSCCH and the PSSCH. The control signal includes SCI, and the SCI includes information indicating which subchannel of the same subframe has been used to allocate the corresponding PSSCH. As a result, the reception-side terminal 100 can ascertain the resource of the PSSCH corresponding to the PSCCH from the SCI. In the example of Fig. 4, information indicating SC1 (a subcarrier 1) as the PSSCH is included in the SCI transmitted using the PSCCH resource allocated to the terminal v1. The terminal v1 can transmit data using this subcarrier.

Next, an example of PSCCH resource allocation in a case where N = 2 to 4 will be described.

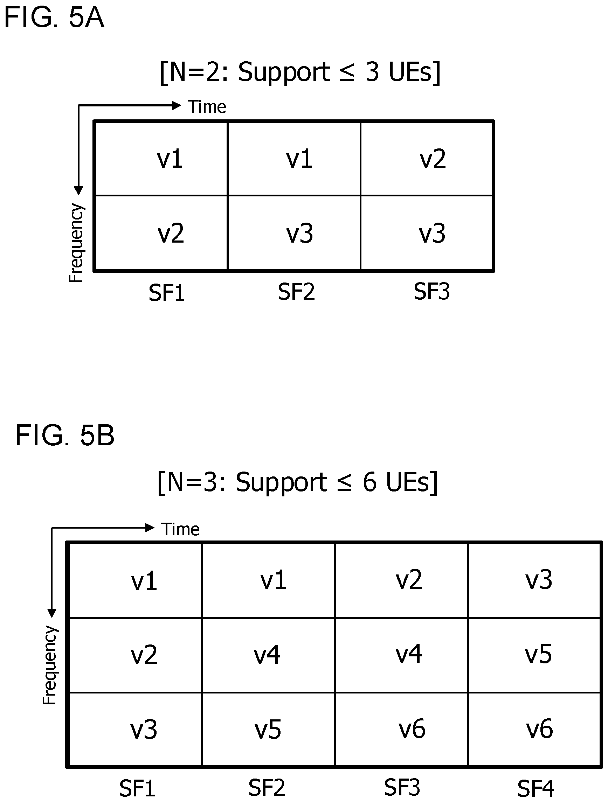

Fig. 5A is a view illustrating an example of PSCCH resource allocation in a case where N = 2.

As illustrated in Fig. 5A, when N = 2, the PSCCH can be allocated to three terminals, namely the terminals v1 to v3. The allocation method is identical to that of Fig. 3. As a result, a resource in SF1 in the time axis direction and in first place in the frequency axis direction and a resource in SF2 in the time axis direction and in first place in the frequency axis direction are allocated to the terminal v1 as PSCCH resources. Further, a resource in SF1 in the time axis direction and in second place in the frequency axis direction and a resource in SF3 in the time axis direction and in first place in the frequency axis direction are allocated to the terminal v2 as PSCCH resources. Furthermore, a resource in SF2 in the time axis direction and in second place in the frequency axis direction and a resource in SF3 in the time axis direction and in second place in the frequency axis direction are allocated to the terminal v3 as PSCCH resources.

Here, focusing on SF1, in the period of SF1, PSCCH resources are allocated to the terminal v1 and the terminal v2. PSCCH resources are not allocated to the terminal v3 in the period of SF1. During the period of SF1, therefore, the terminal v3 serves as a reception mode terminal, for instance. Hence, during the period of SF1, the terminal v3 can receive data transmitted from the terminal v1 and the terminal v2.

Further, focusing on SF2, in the period of SF2, PSCCH resources are allocated to the terminal v1 and the terminal v3. PSCCH resources are not allocated to the terminal v2 in the period of SF2. During the period of SF2, therefore, the terminal v2 serves as a reception mode terminal, for instance. Hence, during the period of SF2, the terminal v2 can receive data transmitted from the terminal v1 and the terminal v3.

Furthermore, focusing on SF3, in the period of SF3, PSCCH resources are allocated to the terminal v2 and the terminal v3, but PSCCH resources are not allocated to the terminal v1. During the period of SF3, therefore, the terminal v1 can receive data transmitted from the terminal v2 and the terminal v3.

In other words, the terminal v3 can receive data during the period of SF1, the terminal v2 can receive data during the period of SF2, and the terminal v1 can receive data during the period of SF3, and as a result, all of the terminals v1 to v3 can receive data during the period from SF1 to SF3.

When PSCCH resources are allocated to the terminal v1 and the terminal v2, for instance, during the entire period from SF1 to SF3, the terminal v1 and the terminal v2 remain in the transmission mode for the entire period from SF1 to SF3. In this case, the terminal v1 and the terminal v2 cannot receive data transmitted from the other terminals v2 and v1 for the entire period from SF1 to SF3. As a result, as illustrated in Fig. 26, packets collide, leading to a reduction in the PRR.

When the PSCCHs are allocated as illustrated in Fig. 5A, however, a period in which each of the terminals v1 to v3 is in the reception mode exists within the period from SF1 to SF3, and therefore the data that are transmitted over the period from SF1 to SF3 can be received in one of these periods. As a result, an improvement in the PRR can be achieved in comparison with a case where PSCCH resources are allocated to the terminal v1 and the terminal v2 over the entire period from SF1 to SF3.

Fig. 5B is a view illustrating an example of PSCCH allocation in a case where N = 3.

The allocation method of Fig. 5B is also identical to that of Fig. 3. Likewise in this case, focusing on the period of SF1, PSCCH resources are allocated to the terminals v1 to v3, but PSCCH resources are not allocated to the other terminals v4 to v6. During the period of SF1, the terminals v4 to v6 are in the reception mode and are therefore capable of receiving data transmitted from the terminals v1 to v3.

Further, during the period of SF2, the terminals v2, v3, and v6 are in the reception mode and are therefore capable of receiving data transmitted from the terminals v1, v4, and v5. Furthermore, during the period of SF3, the terminals v1, v3, and v5 can enter the reception mode, and during the period of SF4, the terminals v1, v2, and v4 can enter the reception mode.

In other words, when N = 3, all of the terminals v1 to v6 are in the reception mode at least once between SF1 and SF3. When, for instance, PSCCH resources are allocated to the terminals v1 to v3 over the entire period from SF1 to SF4, the terminals v1 to v3 do not enter the reception mode and are therefore incapable of receiving data transmitted from the terminals v1 to v3. In the example of Fig. 5B, the terminals v1 to v6 enter the reception mode at least once over the period from SF1 to SF3, and therefore the PRR can be improved in comparison with a case where PSCCH resources are allocated to the terminals v1 to v3 over the entire period from SF1 to SF4.

Furthermore, in the example of Fig. 5B, focusing on the terminal v4, the terminal v4 can enter the reception mode in two subframe periods, namely SF1 and SF4. Moreover, focusing on the terminal v6, the terminal v6 can enter the reception mode in two subframe periods, namely SF1 and SF2. In the example of Fig. 5A, the respective terminals v1 to v3 can enter the reception mode in a single subframe period, i.e. one of SF1 to SF3, whereas in the example of Fig. 5B, each of the terminals v1 to v6 can enter the reception mode in a plurality of subframe periods from SF1 to SF4. Hence, with the example of Fig. 5B, the reception efficiency of the terminal in the reception mode can be improved in comparison with the example of Fig. 5A.

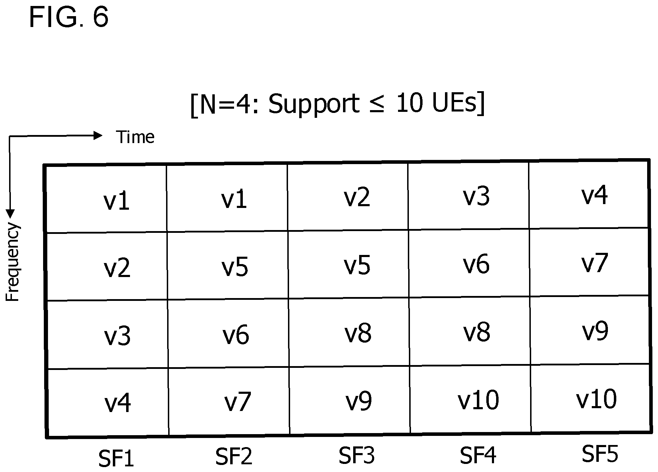

Fig. 6 is a view illustrating an example of PSCCH resource allocation in a case where N = 4.

The allocation method of Fig. 6 is also identical to that of Fig. 3. Likewise in the example depicted in Fig. 6, all of the terminals v1 to v10 enter the reception mode for at least one subframe period among the periods from SF1 to SF5.

Further, focusing on the terminal v1, the terminal v1 can enter the reception mode in three subframe periods, namely SF3 to SF5. Furthermore, focusing on the terminal v2, the terminal v2 can enter the reception mode in three subframe periods, namely SF2, SF4, and SF5. Moreover, focusing on the terminal v8, the terminal v8 can enter the reception mode in three subframe periods, namely SF1, SF2, and SF5.

In other words, in the example depicted in Fig. 6, the periods in which the respective terminals 100 can enter the reception mode are even longer than those of the example depicted in Fig. 5B. Therefore, with the example depicted in Fig. 6, the reception efficiency can be improved over the example depicted in Fig. 5B.

The number of terminals 100 installed in a vehicle may reach several tens. When PSCCH resources are allocated to this number of terminals 100 using the allocation method illustrated in Fig. 3, each terminal 100 enters the reception mode in an even great number of subframe periods than the case illustrated in Fig. 6, and as a result, a further improvement can be achieved in the reception efficiency.

The examples of PSCCH resource allocation illustrated in Fig. 3 and Figs. 5A to 6 are implemented in a subgroup included in the V2X group, for instance. When, for instance, the number of PSCCHs (in the above examples, the number of PSCCH subchannels) included in the frequency axis direction is set as N and the number of terminals 100 included in one V2X group is set as M (where M is an integer of 1 or more), a number L of subgroups can be calculated using the following formula.

[Math. 1]

$$L = \left\lceil \frac{2M}{N \times (N+1)} \right\rceil \quad \cdots \quad (1)$$

Note that M expresses the total number of terminals 100, including a host terminal 100 and other terminals, for instance.

The relationship between the subgroups and the V2X group and randomization within the V2X group will now be described.

Note that the resource allocation illustrated in Figs. 3 to 6 is performed by the subgroup management unit 1110, for instance, while the calculation of formula (1) is performed by the group management unit 111, for instance.

<4. Relationship between subgroups and V2X group>

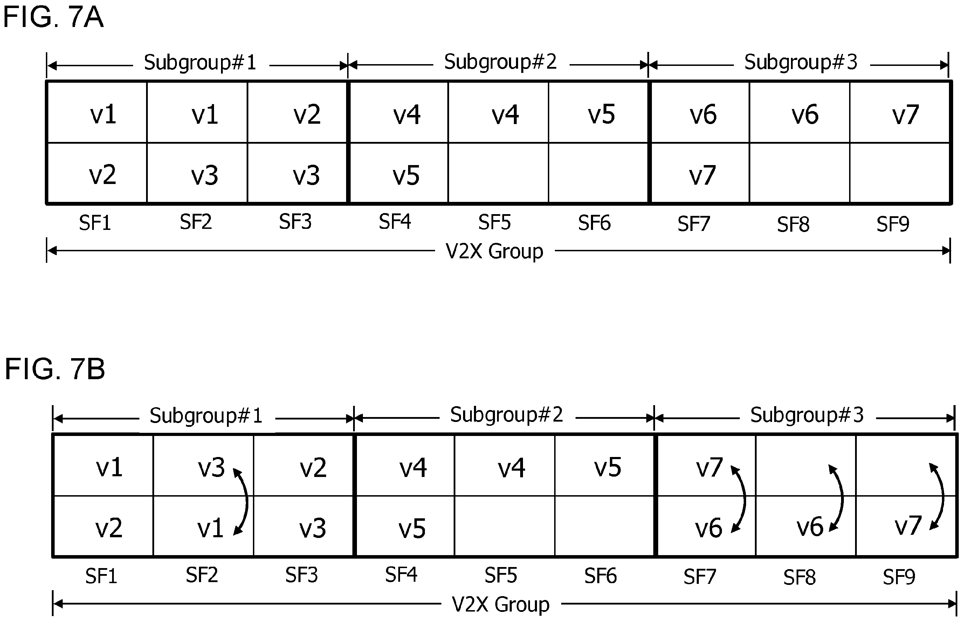

Fig. 7A is a view illustrating an example of PSCCH resource allocation in a case where N = 2 (the number of PSCCHs in the frequency axis direction = 2) and M = 7 (the number of terminals 100 included in the V2X group = 7).

When the number L of subgroups included in the V2X group is calculated using formula (1) in a case where N = 2 and M = 7, L = 3. Hence, as illustrated in Fig. 7A, the V2X group can be divided into three subgroups.

The terminal 100 then allocates the PSCCH resources to the respective terminals 100 in each subgroup using the PSCCH allocation method illustrated in Fig. 3. In the example of Fig. 7A, the terminal 100 allocates PSCCH resources to the terminals v1 to v3 in a subgroup #1. Further, the terminal 100 allocates PSCCH resources to the terminals v4 and v5 in a subgroup #2. Furthermore, the terminal 100 allocates PSCCH resources to the terminals v6 and v7 in a subgroup #3.

In accordance with L and M, the terminal 100 calculates the number L of subgroups using formula (1) and allocate PSCCH resources to the respective terminals 100 in each subgroup using the PSCCH allocation method illustrated in Fig. 3 and so on.

In this case, as illustrated in Fig. 7A, for instance, resources to which PSCCH resources are not allocated exist. In the first embodiment, such empty resources are permitted. For instance, when the PSCCHs of the terminals 100 are allocated to all of the PSCCH resources, and a packet delay occurs in one resource, for instance, the packet may be delayed in the other resources. In anticipation of such a situation occurring, empty resources may be left as is. Note that in the first embodiment, the empty resources are used when high-priority data are transmitted. This will be described in detail below.

<5. Randomization>

In the first embodiment, after the PSCCH resources have been allocated to the respective terminals 100 in the respective subgroups using the allocation method illustrated in Fig. 3, the resources can be randomized within the V2X group. In Fig. 7A, for instance, the terminal v6 and the terminal v7 take a longer time to transmit the PSCCH than the other terminals v1 to v5. By performing randomization, the time taken by the respective terminals v1 to v7 to transmit the PSCCH can be made uniform, for instance, and as a result, the resources can be allocated fairly.

As a randomization procedure, randomization is performed in the frequency axis direction first and then in the time axis direction.

Fig. 7B is a view illustrating an example of PSCCH resource allocation after PSCCH resource allocation has been performed in accordance with Fig. 7A and randomization has been performed in the frequency axis direction.

In the example of Fig. 7B, in SF2, the resource allocated to the terminal v3 and the resource allocated to the terminal v1 are switched in the frequency axis direction. Further, in SF7, the resource allocated to the terminal v6 and the resource allocated to the terminal v7 are switched in the frequency axis direction. The resources are also switched in the frequency axis direction in SF8 and SF9.

For instance, randomization in the frequency axis direction may be realized by switching any resources within the range of the frequency axis direction resources allocated to the respective subframe periods, as long as one resource is switched for another resource. In the example of Fig. 7B, N = 2, and therefore two resources are switched in the frequency axis direction, but when N = 3 such that PSCCH resources are allocated in sequence to the terminals v1 to v3 in SF1, the resource of the terminal v1 may be switched with the resource of the terminal v2 or the resource of the terminal v1 may be switched with the resource of the terminal v3. Alternatively, the resource of the terminal v1 and the resource of the terminal v2 may be switched alone without switching the resource of the terminal v3, or the resources of all of the terminals v1 to v3 may be switched.

Further, in the example of Fig. 7B, the resources of SF2 and SF7 to SF9 are subjected to switching, but the resources of the other SFs may also be subjected to switching. For instance, the resources of SF1 (the resources of the terminal v1 and the terminal v2) may be subjected to switching, or the resources of SF5 (the resource of the terminal v4) may be subjected to switching.

Thus, randomization in the frequency axis direction is performed by switching the PSCCH resources allocated to the respective terminals 100 in the frequency axis direction.

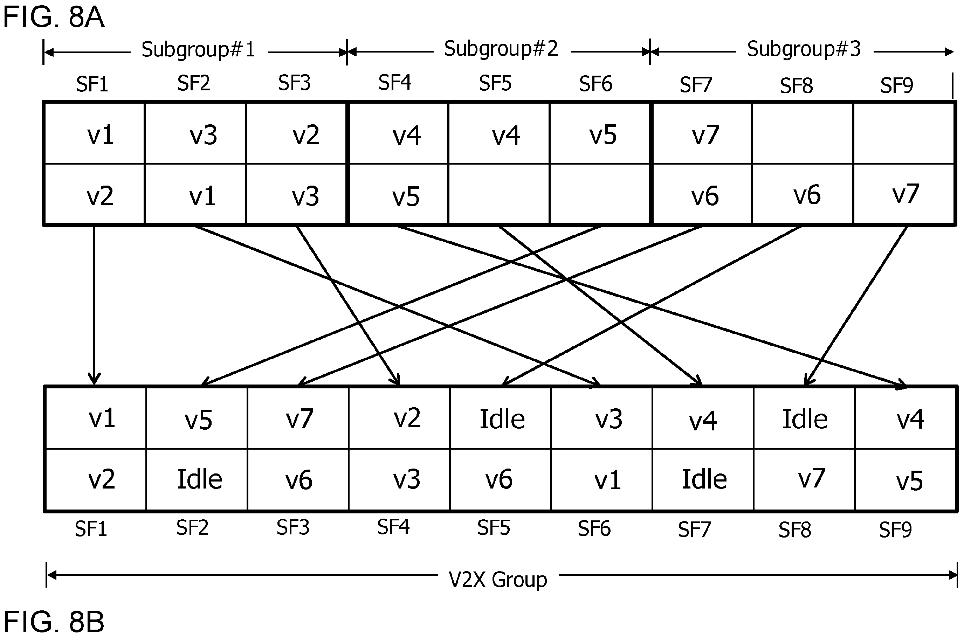

Figs. 8A and 8B are views illustrating examples of PSCCH allocation in a case where randomization is performed in the time direction. Fig. 8A illustrates an example of PSCCH allocation prior to randomization in the time direction (the same allocation example as Fig. 7B), and Fig. 8B illustrates an example of PSCCH allocation following randomization in the time direction.

In the example of Fig. 8B, the resources of SF2 are disposed in SF6, and the resources of SF3 are disposed in SF4. Further, in the example of Fig. 8B, the resources of SF4 are disposed in SF9, the resources of SF5 are disposed in SF7, the resources of SF6 are disposed in SF2, the resources of SF7 are disposed in SF3, the resources of SF8 are disposed in SF5, and the resources of SF9 are disposed in SF8. Note, however, that the resources of SF1 are not moved.

Randomization in the time axis direction is performed by grouping the resources in each subframe in the frequency axis direction into one and disposing each grouping in a different subframe. Alternatively, randomization in the time direction is performed by performing switching in units of the frequency axis direction resources allocated to each subframe period. In this case, as long as switching is not performed so that one grouping and another grouping overlap in the same subframe period, the resources may be disposed in any subframe.

Hence, randomization involves switching the PSCCH resources at random in the frequency axis direction and the time axis direction, for instance. Further, the PSSCH is also switched in accordance with switching of the PSCCH resources.

However, in Fig. 8A, for instance, switching of the resources of the terminal v1 allocated to the SF1 period and the terminal v3 allocated to SF2 is not permitted. In other words, switching the resources of a certain terminal 100 in a subframe period and another terminal 100 in another subframe period across subframe periods is not permitted. When randomization is to be performed across subframe periods, for instance, it is permitted to form the PSCCH resources of the two terminals v1 and v2 allocated to SF1 into a single grouping, form the PSCCH resources of the two terminals v3 and v1 allocated to SF2 into a single grouping, and switch the resources between the groupings.

<5.1 Randomization>

Next, formularization of the randomization described above will be described.

A matrix formula of N $\times$ (N + 1)L, as illustrated below, will be considered.

[Math. 2]

$$V_i^{(g)}$$

$$
= \begin{bmatrix}
V_{1,1} & V_{1,1} & \cdots & V_{1,N} & V_{2,1} & V_{2,1} & \cdots & V_{2,N} & V_{L,1} & V_{L,1} & \cdots & V_{L,N} \\
V_{1,2} & V_{1,N+1} & \cdots & V_{1,2N-1} & V_{2,2} & V_{2,N+1} & \cdots & V_{2,2N-1} & V_{L,2} & V_{L,N+1} & \cdots & V_{L,2N-1} \\
\vdots & \vdots & \ddots & \vdots & \vdots & \vdots & \ddots & \vdots & \cdots & \vdots & \vdots & \ddots & \vdots \\
V_{1,N} & V_{1,2N-1} & \cdots & V_{1,\frac{N(N+1)}{2}} & V_{2,N} & V_{2,2N-1} & \cdots & V_{2,\frac{N(N+1)}{2}} & V_{L,N} & V_{L,2N-1} & \cdots & V_{L,\frac{N(N+1)}{2}}
\end{bmatrix}
$$

$$\cdots \quad (2)$$

In formula (2), $V_{k,j}$ represents an index of the terminals 100 in an i-th V2X group. The object of randomization is to randomize the indices of the terminals 100 within the i-th V2X group, for instance. In other words, the object of randomization is to randomize $V_{k,j}$ for instance.

First, for instance, randomization is performed individually on each of the columns illustrated in Fig. 3 on the basis of a predetermined N × (N + 1)L matrix including a series $R^{(c)}$.

Here, the series $R^{(c)}$ is expressed by
[Math. 3]

$$R^{(c)} = \begin{bmatrix} R_1^{(c)} & R_2^{(c)} & \cdots & R_{(N+1)L}^{(c)} \end{bmatrix} \quad \cdots \quad (3)$$

Note that R in the determinant of formula (3) is a pseudo-random number sequence expressed by a vector illustrated below.
[Math. 4]

$$R_l^{(c)} = \begin{bmatrix} r_{l,1}^{(c)} & r_{l,2}^{(c)} & \cdots & r_{l,N}^{(c)} \end{bmatrix}^T \quad \cdots \quad (4)$$

Note that r in the determinant of formula (4) is an integer satisfying the following.
[Math. 5]

$$r_{l,k}^{(c)} \neq r_{l,j}^{(c)} \ if \ k \neq j, \ and \ r_{l,k}^{(c)} \leq N \quad \cdots \quad (5)$$

Here, randomization is executed continuously on the column on the basis of a predetermined 1 × (N + 1)L vector including a pseudo-random number sequence $R^{(r)}$ illustrated below.
[Math. 6]

$$R^{(r)} = \begin{bmatrix} r_1^{(r)} & r_2^{(r)} & \cdots & r_{(N+1)L}^{(r)} \end{bmatrix} \quad \cdots \quad (6)$$

In formula (6), r is an integer satisfying the following.
[Math. 7]

$$r_l^{(r)} \neq r_j^{(r)} \ if \ l \neq j, \ and \ r_l^{(r)} \leq (N+1)L \quad \cdots \quad (7)$$

The manner in which the matrix $R^{(c)}$ and the vector $R^{(r)}$ are used can be ascertained easily by using the example of N = 2, L = 3 illustrated in Figs. 8A and 8B.

In other words, a matrix V of the terminals 100 is expressed as follows.
[Math. 8]

$$V_i^{(g)} = \begin{bmatrix} 1 & 1 & 2 & 4 & 4 & 5 & 6 & 6 & 7 \\ 2 & 3 & 3 & 5 & x & x & 7 & x & x \end{bmatrix} \quad \cdots \quad (8)$$

In formula (8), × represents an idle channel (or an empty resource), for instance, and indicates non-allocation to a terminal 100.
Hence, R$^{(c)}$ and R$^{(r)}$ determined in advance are expressed as follows.
[Math. 9]

$$R^{(c)} = \begin{bmatrix} 1 & 2 & 1 & 1 & 1 & 1 & 2 & 2 & 2 \\ 2 & 1 & 2 & 2 & 2 & 2 & 1 & 1 & 1 \end{bmatrix} \quad \cdots \quad (9)$$

[Math. 10]

$$R^{(r)} = \begin{bmatrix} 1 & 6 & 7 & 3 & 8 & 2 & 5 & 9 & 4 \end{bmatrix} \quad \cdots \quad (10)$$

Randomization is executed first on R$^{(c)}$ and then on R$^{(r)}$, and as a result, a random matrix V illustrated below is acquired.
[Math. 11]

$$V_i^{(g')} = \begin{bmatrix} 1 & 5 & 7 & 2 & x & 3 & 4 & x & 4 \\ 2 & x & 6 & 3 & 6 & 1 & x & 7 & 5 \end{bmatrix} \quad \cdots \quad (11)$$

<6. Transmission of high-priority data>

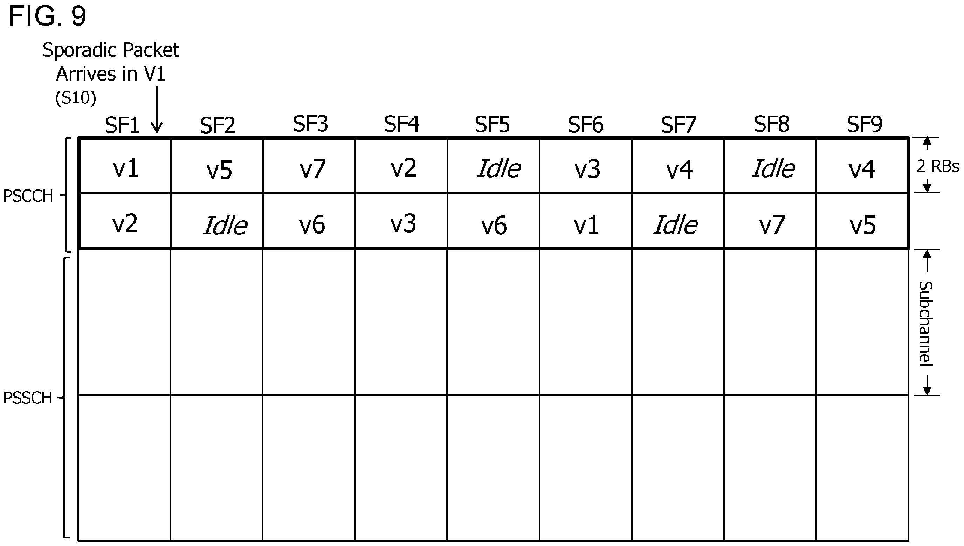

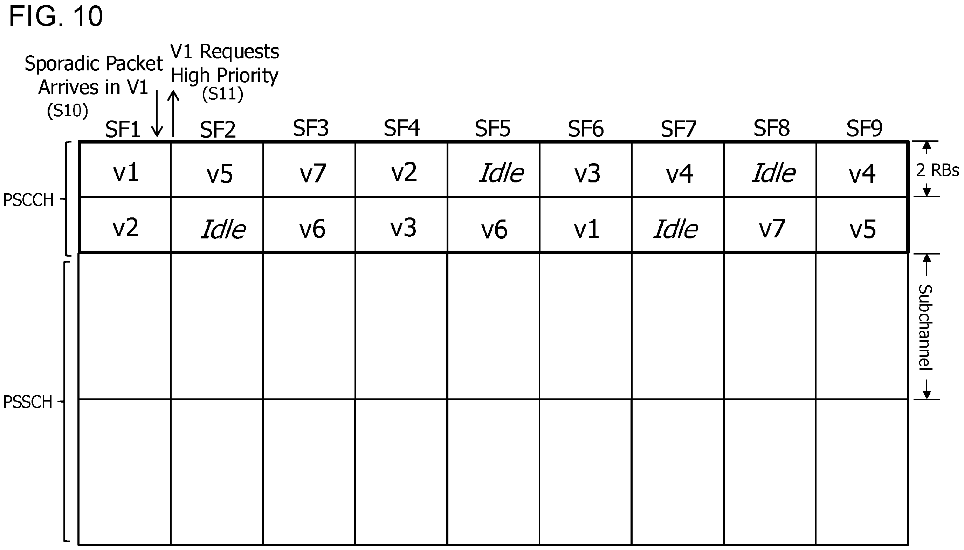

The terminal 100 allocates the PSCCH to the respective terminals within the subgroup, as illustrated in Fig. 3, for instance, randomizes the PSCCH resources in the V2X group, and uses the result of randomized PSCCH resource allocation to transmit a control signal and data. At this time, the terminal 100 may transmit data with high priority. An example of high-priority data transmission will be described below using Figs. 9 to 14.
It is assumed, for instance, that the terminal 100 has acquired the PSCCH allocation result depicted in Fig. 8B following randomization.
Fig. 9 is a view illustrating an example of resource allocation. The examples of PSCCH resource allocation illustrated in Figs. 9 and 8B are identical.
As depicted in Fig. 9, a case in which the terminal v1 has the occasion to transmit high-priority data (or a sporadic packet; also referred to hereafter as high-priority data) during the SF1 period may occur (S10). In this case, as illustrated in Fig. 10, the terminal v1 generates a transmission request and transmits the generated transmission request (S11). The terminal v1 transmits the transmission request using the PCRLICH.
Fig. 15A is a view illustrating an example of PCRLICH resource allocation. The PCRLICH exists in a different frequency domain to the PSCCH and the PSSCH. The PCRLICH may also be referred to as a reordering control channel, for instance.
Fig. 15B is a view illustrating an example of information transmitted using the PCRLICH.
The PCRLICH is divided into two regions, namely a slot #1 and a slot #2. The slot #1 is provided with an AGC (Automatic Gain Control) region, a DMRS (Demodulation Reference Signal) region, a guard interval region, and a transmission request region. Each region represents a single symbol period, for instance.
The AGC region is a region for automatically controlling the gain, for instance. The DMRS region is a region for transmitting a reference signal that serves as a reference signal during demodulation, for instance. The guard interval region is a region used to prevent interference with the adjacent slot, for instance.
The transmission request region is a region for transmitting the transmission request, for instance. The terminal 100 that generates the high-priority data transmits the transmission request using the symbol of the transmission request region in the slot #1.

The slot #2 is provided with an AGC region, a DMRS region, a guard interval region, and a reordering information region. The reordering information region is a region in which, for instance, the representative terminal (the terminal 100-6, for instance), having received the transmission request, transmits information on the reordered resources. The representative terminal 100, having received the transmission request using the symbol of the transmission request region of the slot #1, transmits reordering information using the symbol of the reordering information region of the slot #2. Meanwhile, the terminal 100 that transmitted the transmission request receives the reordering information transmitted from the representative terminal using the symbol of the reordering information region of the slot #2.

Returning to Fig. 10, when transmitting the transmission request, the terminal v1 transmits the transmission request using the symbol of the transmission request region in the slot (the slot #1) in the first half of the period of SF2 (S11).

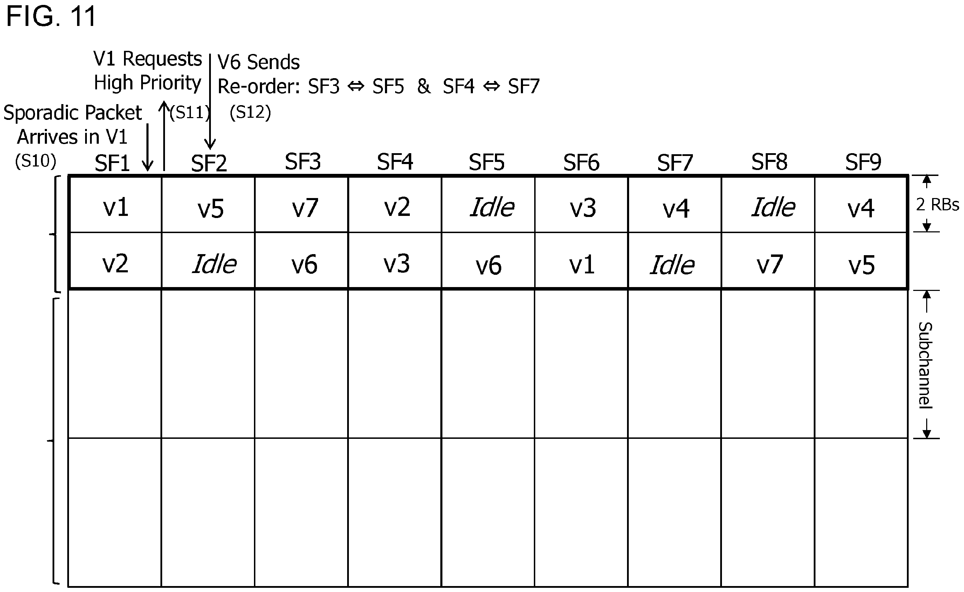

Then, as illustrated in Fig. 11, the terminal v1 receives the reordering information from the representative terminal (the terminal 100-6, for instance) on the PCRLICH using the symbol of the reordering information region in the slot (the slot #2) in the second half of SF2 (S12).

As illustrated in Fig. 11, the reordering information ("Re-order") is information indicating that the resources of SF3 and the resources of SF5 are to be switched and that the resources of SF4 and the resources of SF7 are to be switched.

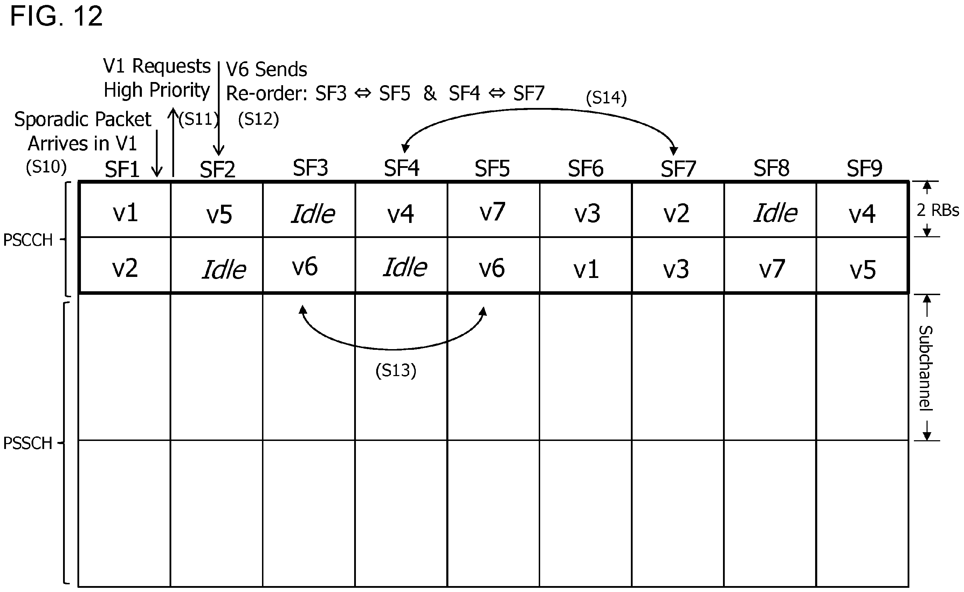

As illustrated in Fig. 12, the terminal v1 reorders the resources again in accordance with the reordering information from the randomized PSCCH resource allocation result (S13, S14).

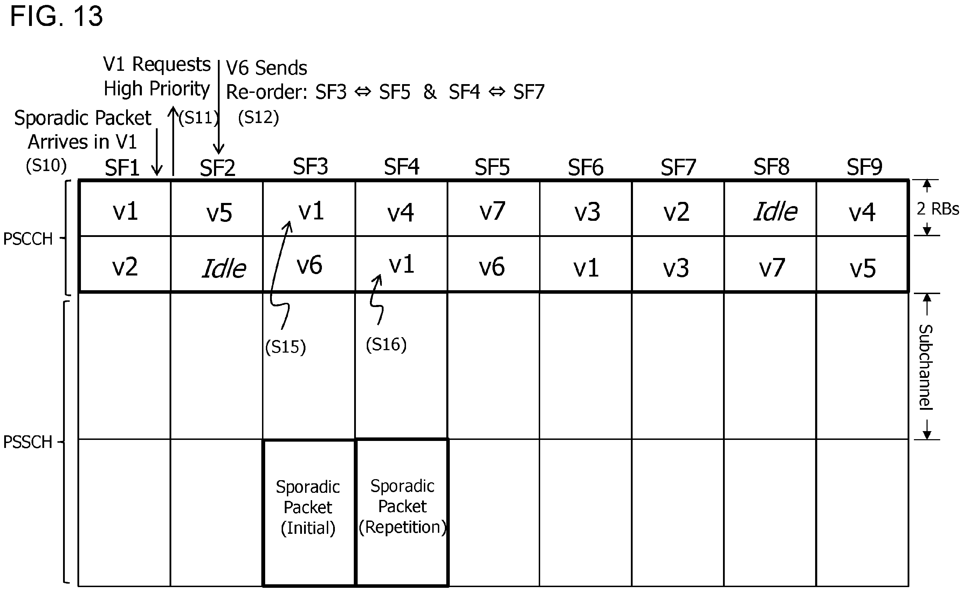

Following reordering, as illustrated in Fig. 13, the terminal v1 allocates the "Idle" resource in SF3 as a high-priority data transmission resource (S15). Further, the terminal v1 allocates the "Idle" resource in SF4 as a high-priority data transmission resource (S16). As a result, the terminal v1 becomes capable of two transmissions, namely initial transmission and repetition transmission, as the PSCCH for high-priority data transmission, and also becomes capable of two transmissions, namely initial transmission and repetition transmission, of the high-priority data. The terminal v1 transmits the high-priority data using the PSSCH resource indicated by the PSCCH.

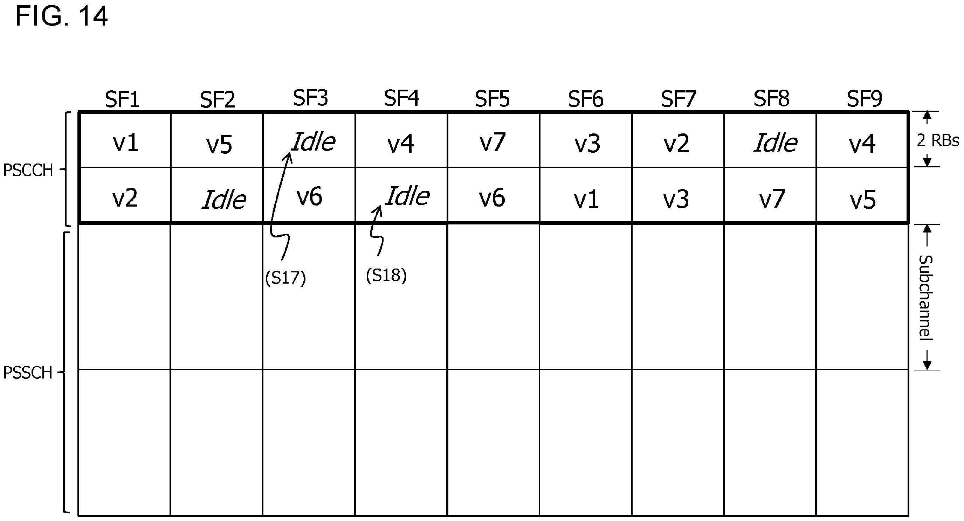

As illustrated in Fig. 14, having completed transmission of the high-priority data, the terminal v1 returns to the state prior to high-priority data allocation of the PSCCH and PSSCH resources allocated to transmission of the high-priority data. In other words, the terminal v1 returns the resource allocated as the high-priority data PSCCH of SF3 to an "Idle" resource (S17). Further, the terminal v1 returns the resource allocated as the high-priority data PSCCH of SF4 to an "Idle" resource (S18).

Thus, the terminal v1 switches the PSCCH resources in accordance with the reordering information generated by the representative terminal. The switching itself is identical to the switching performed in the time axis direction during randomization, for instance (Figs. 8A and 8B, for instance). In other words, the terminal v1 groups the frequency axis direction resources in one subframe period and switches the grouping with the resources in another subframe period. At this time, the terminal v1 switches the resources so as to ensure that a plurality of resources do not overlap in the same subframe period.

Further, the terminal v1 transmits the high-priority data using a resource in an "Idle" state. In this case, the terminal v1 transmits the transmission request to the representative terminal in the slot in the first half of the subframe period and receives the reordering information from the representative terminal in the slot in the second half of the subframe period. Therefore, the terminal v1 can secure the PSCCH and PSSCH resources for transmitting the high-priority data within a subframe period, and as a result, resources can be secured and the high-priority data can be transmitted quickly.

<7. V2X grouping based on reuse of resource pool>

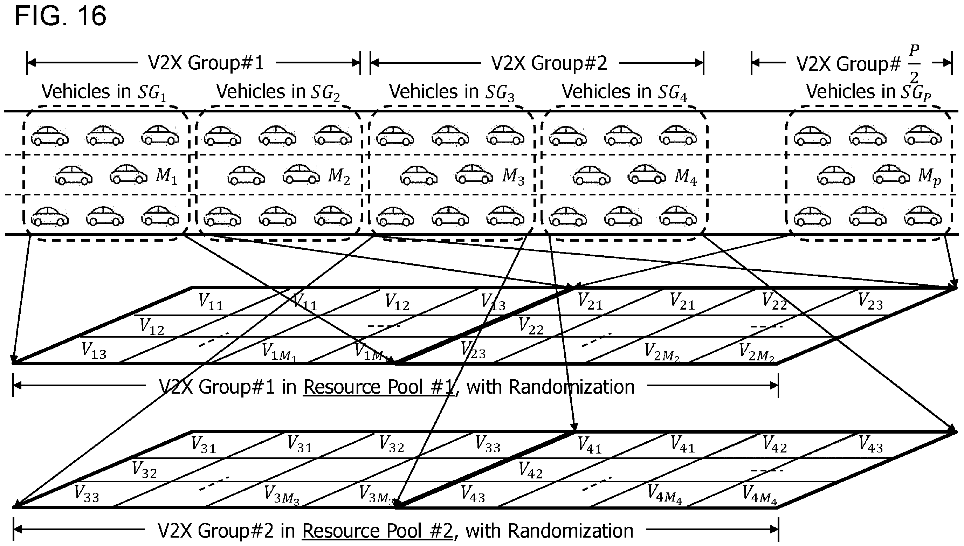

Fig. 16 is a view illustrating an example in which a plurality of V2X groups are formed and each V2X group is allocated to two resource pools.

In the example depicted in Fig. 16, a V2X group #1 includes two subgroups $SG_1$, $SG_2$, and a V2X group #2 includes two subgroups $SG_3$, $SG_4$. When the number of subgroups is set as P, the number of V2X groups is up to P/2, and a V2X group #(P/2) includes two subgroups $SG_{P-1}$, SGp.

Further, in the example depicted in Fig. 16, two resource pools, namely a resource pool #1 and a resource pool #2, are provided. The two resource pools are disposed in different frequency bands.

The terminal 100 allocates the PSCCHs of the terminals included in the V2X group #1 to the resource pool #1 and allocates the PSCCHs of the terminals included in the V2X group #2 to the resource pool #2. Further, the terminal 100 allocates the PSCCHs of the terminals included in a V2X group #3 to the resource pool #1 and allocates the PSCCHs of the terminals included in a V2X group #4 to the resource pool #2. Thereafter, the terminal 100 repeats this operation so as to allocate the PSCCHs of the terminals included in the V2X group #(P/2) to the resource pool #1.

The terminals 100 included in the subgroup $SG_2$ and the terminals 100 included in the subgroup $SG_3$, for instance, are closer in distance than two terminals 100 included in the other subgroups. Therefore, interference is more likely to occur between the terminals 100 of the subgroups $SG_2$ and $SG_3$ than with the other terminals 100.

In the first embodiment, however, the terminals 100 of the subgroup $SG_2$ and the terminals 100 of the subgroup

SG$_3$ belong to different V2X groups and allocate the PSCCH resources to different resource pools. Therefore, with the PSCCH allocation method according to the first embodiment, the effects of interference occurring when the distance between terminals 100 is short can be reduced. Moreover, in the first embodiment, by reducing the effects of interference, the rate at which packets are received in the reception terminal can be increased, leading to an improvement in the PRR.

Fig. 16 depicts an example in which the PSCCH resources are allocated to two resource pools in each V2X group. Instead, for instance, the PSCCH resources may be allocated to a single resource pool in V2X group units, or the PSCCH resources may be allocated to three or more resource pools in V2X group units. A single resource pool may be shared by a plurality of V2X groups, for instance.

Note that allocation of the V2X groups to the resource pools is performed by the subgroup management unit 1110 or the group management unit 111, for instance.

Here, an attempt will be made to formularize Fig. 16.

The terminals 100 are divided into P subgroups, namely SG$_1$, SG$_2$, ..., SG$_P$. Here, when the number of terminals 100 included in a p-th subgroup is set as Mp, Mp is expressed as follows.

[Math. 12]

$$M_p \leq \frac{N \times (N+1)}{2} \quad \cdots \quad (1\ 2)$$

To reduce interference between the terminals 100, V2X communication is assumed to include a resource pool having a reuse factor R. One resource pool is used exclusively for one V2X group, and as a result, the terminals 100 included in the V2X group are allocated to a resource pool that is reused by the factor R.

The number of subgroups included in the i-th V2X group is L, and therefore a number M$_i^{(g)}$ of terminals 100 included in the i-th V2X group is expressed by the following formula.

[Math. 13]

$$M_i^{(g)} = \sum_{p=1}^{L} M_{L(i-1)+p} \leq \frac{LN \times (N+1)}{2}, \quad for\ 1 \leq i \leq \left\lceil \frac{P}{L} \right\rceil \quad \cdots \quad (1\ 3)$$

A case in which two resource pools having equal reuse factors R = 2 are provided and each V2X group has two subgroups (L = 2), as illustrated in Fig. 16, will be considered. In this case, as described above, the two subgroups SG$_1$, SG$_2$ form the V2X group #1, and the two subgroups SG$_3$, SG$_4$ form the V2X group #2. Further, in accordance with the reuse factor R = 2, the resource pool #1 and the resource pool #2 are allocated respectively to the terminals 100 included in the V2X group #1 and the terminals 100 included in the V2X group #2. Thereafter, the operation is repeated up to the final V2G group.

Note that likewise in the example depicted in Fig. 16, randomization processing (Figs. 8A and 8B, for instance) is performed individually on each V2X group.

<8. Grouping of V2X groups in accordance with various packet arrival times>

In the example described above, it is assumed that each terminal 100 sets a data arrival time at random and generates data periodically. When the data are generated periodically, the data arrival time may be 10 ms, 30 ms, 100 ms, or the like, but in the case of aperiodic traffic, the data arrival time is, on average, 10 ms or 50 ms. Considering various use cases, however, the arrival time is diverse. The most frequent data arrival time is 100 ms or less, but in several cases, the data arrival time may be 500 ms. Here, resource allocation to the terminals 100 in accordance with diverse data arrival times will be described.

When a maximum value of the data arrival time is set as T$_{max}$, T$_{max}$ is set at an identical length to the length of the V2X group, as indicated below.

[Math. 14]

$$T_{max} = L(N+1) \cdot T_{sf} \quad \cdots \quad (1\ 4)$$

In formula (14), T$_{sf}$ is the subframe interval, which is typically 1 ms, for instance, but depends on the sub-carrier space (SCS). Note, however, that slots, mini-slots, or symbols may be used instead of subframes.

Here, resource allocation to the terminals 100 is divided into two types. The first type is a case in which periodic traffic having an arrival time not exceeding T$_{max}$ is generated. The second type is a case in which periodic traffic (or aperiodic traffic) having a longer time than $T_{max}$ is generated. In the latter case, for instance, the terminal 100 can perform processing using the method described in <6. Transmission of high-priority data>.

Here, a great number of PSCCHs may be allocated to the terminals 100 in which the data arrival time does not exceed $T_{max}$. Accordingly, the number of PSCCHs used exclusively by an m-th terminal 100 is expressed as follows.

[Math. 15]

$$M_m^{(cc)} = \left\lceil \frac{T_{max}}{T_m} \right\rceil \quad \cdot \cdot \cdot \quad (15)$$

In formula (15), $T_m$ represents the data arrival time in the m-th terminal 100.

Accordingly, the maximum value $M_i^{(g)}$ of the number of terminals 100 in the i-th V2X group satisfies the following formula.

[Math. 16]

$$\sum_{m=1}^{M_i^{(g)}} M_m^{(cc)} \leq \frac{LN \times (N+1)}{2} \quad \cdot \cdot \cdot \quad (16)$$

Here, when determining the maximum value $M_i^{(g)}$ of the number of terminals 100, several "Idle" channels are preferably reserved for exclusive use with aperiodic and/or high-priority data.

PSCCH allocation within the V2X group is defined as being performed in evenly allocation manner or a non-uniform spacing allocation manner. When PSCCH randomization and reordering are performed as described above, the effects of the latency of each terminal 100 are to be considered. The manner in which to transfer data in consideration of the desired latency is to be considered as an implementation issue.

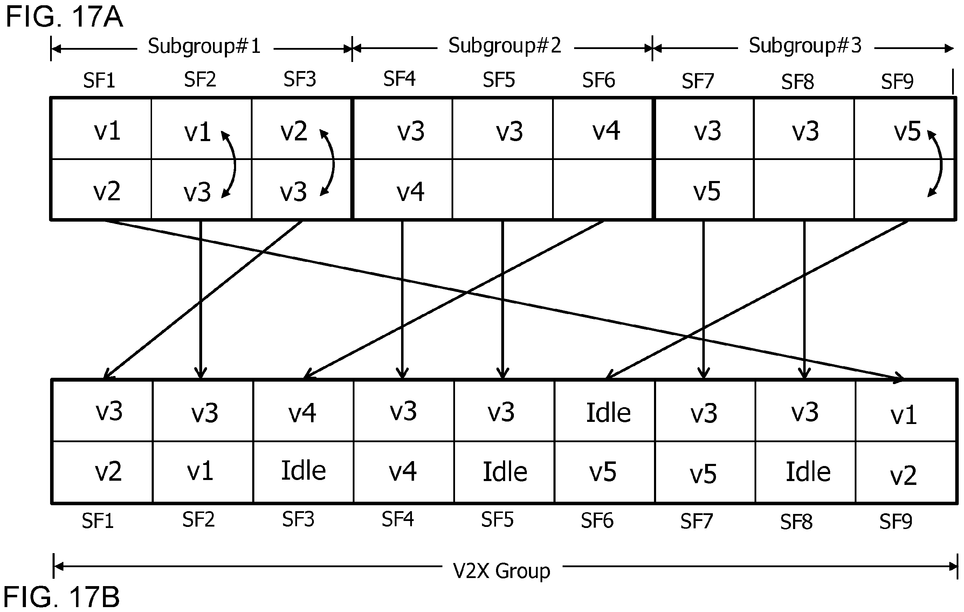

Figs. 17A and 17B are views illustrating examples of PSCCH allocation in the evenly allocation manner. The terminal 100 switches the resources in SF2, SF3, and SF9 (randomization in the frequency axis direction), as illustrated in Fig. 17A, and switches the resources of SF1 to SF9, SF3 to SF1, and so on (randomization in the time axis direction), as illustrated in Fig. 17B.

In Fig. 17B, focusing on the resources allocated to the terminal v3, in each subgroup, the PSCCHs are allocated in the same pattern. More specifically, in a subgroup #1, the PSCCH resources allocated to the terminal v3 are SF1 in first place in the frequency axis direction and SF2 in first place in the frequency axis direction. Further, in a subgroup #2, the PSCCH resources of the terminal v3 are allocated to SF4 and SF5 in first place in the frequency axis direction. In other words, in each subgroup, the PSCCHs of the terminal v3 are allocated to the first subframe and the following subframe in the same position in the frequency axis direction.

By allocating the PSCCHs in the same pattern in each subgroup in this manner, the terminals 100 can handle reception of periodic traffic having an arrival time not exceeding $T_{max}$, for instance.

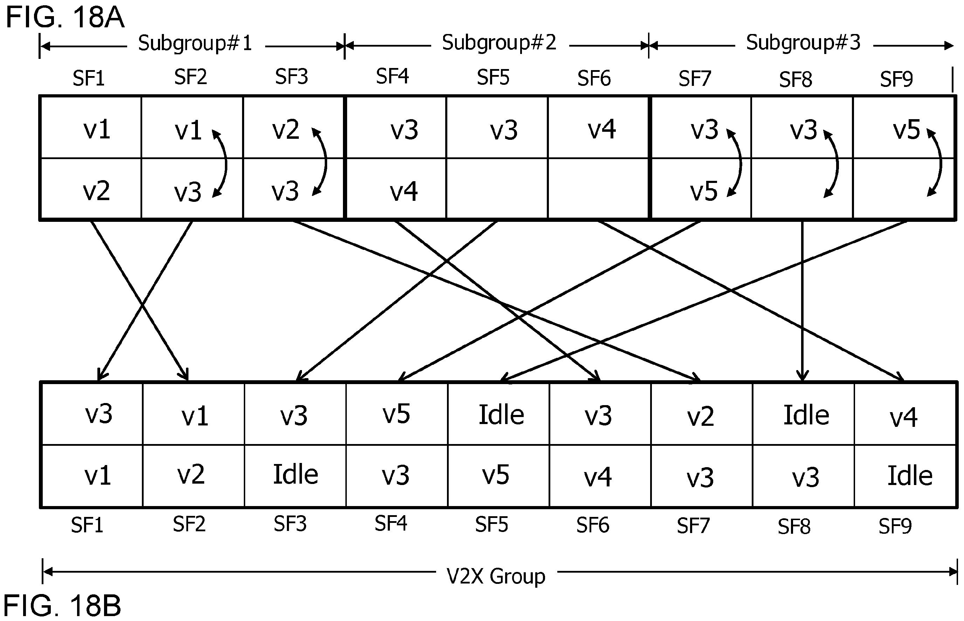

Figs. 18A and 18B are views illustrating examples of PSCCH allocation in the non-uniform spacing allocation manner.

In the example of Fig. 18A, the terminal 100 switches the resources in SF2, SF3, and SF7 to SF9 (randomization in the frequency axis direction). Further, as illustrated in Fig. 18B, the terminal 100 switches the resources of SF1 to SF2, SF2 to SF1, and so on (randomization in the time axis direction), and so on.

In this case, as illustrated in Fig. 18B, the positions of the PSCCH resources allocated to the terminal v3 do not follow the same pattern in each group. Note, however, that with respect to the terminal v3, at least two subframe periods and PSCCH resources are allocated in every subgroup, and it is therefore possible to handle reception of periodic traffic having an arrival time not exceeding $T_{max}$.

<9. Example operations>

As example operations, first, an example operation of PSCCH resource allocation will be described. Next, an example operation in a case where high-priority data are transmitted will be described.

<9.1 Example operation of PSCCH resource allocation>

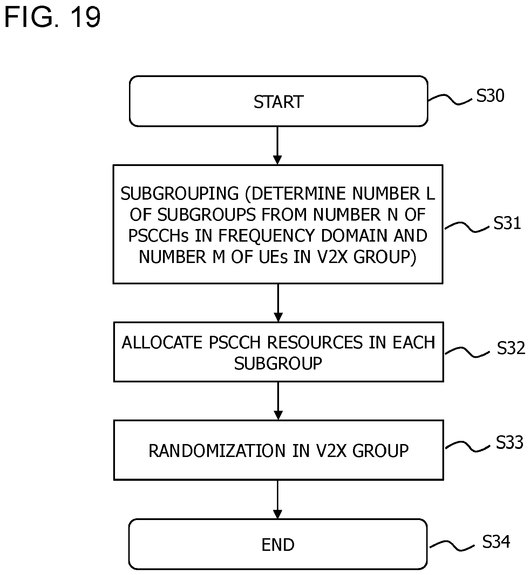

Fig. 19 is a flowchart illustrating an example operation of PSCCH resource allocation.

At the start of the processing (S30), the terminal 100 performs subgrouping of the plurality of terminals by determining the number L of subgroups from the number M of terminals in the V2X group and the number N of PSCCHs in the frequency axis direction (S31). For instance, the subgroup management unit 1110 determines the number L of subgroups by reading the number M of terminals in the V2X group, the number N of PSCCHs in the frequency axis direction, and formula (1) from the memory 120 and inserting M and N into formula (1). The subgroup management unit 1110 allocates the respective terminals 100 to the subgroups in sequence in accordance with the number L of subgroups.

Next, the terminal 100 allocates the PSCCH resources within each subgroup (S32). For instance, the subgroup management unit 1110 allocates the PSCCH resources to the respective terminals 100 in sequence within each subgroup, as illustrated in Fig. 3.

Next, the terminal 100 performs randomization within the V2X group (S33). For instance, the subgroup management unit 1110 randomizes the PSCCH resources allocated to the respective terminals 100 in the frequency axis direction (Fig. 7B, for instance) and then randomizes the PSCCH resources in the time axis direction (Fig. 8B, for instance).

The terminal 100 then terminates PSCCH resource allocation (S34).

Next, the subgroup management unit 1110 outputs the allocation result to the used resource control unit 112. In accordance with the allocation result, the used resource control unit 112 instructs the transmission control unit 113 to transmit a control signal and data using the PSCCH and PSSCH resources allocated to the host terminal. In response to the instruction, the transmission control unit 113 transmits the control signal using the PSCCH and transmits the data using the PSSCH. In this case, as illustrated in Fig. 3, the transmission control unit 113 transmits the control signal using the initial PSCCH resource and then resends the control signal using the repetition PSCCH resource. In this case, the transmission control unit 113 transmits the data using the PSSCH resource specified by the SCI included in the initial control signal, and resends the data using the PSSCH resource specified by the SCI included in the resent control signal.

<9.2 High-priority data transmission>

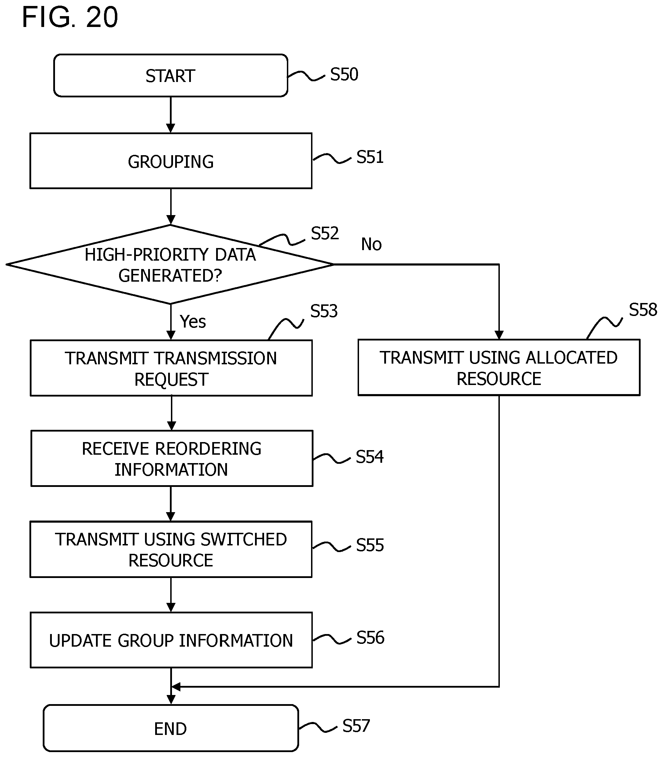

Fig. 20 is a flowchart illustrating an example operation performed to transmit high-priority data.

At the start of the processing (S50), the terminal 100 performs grouping (S51). The terminal 100 performs grouping by executing the processing illustrated in Fig. 19.

Returning to Fig. 20, next, the terminal 100 checks whether high-priority data have been generated (S52). For instance, the group management unit 111 may perform this processing by checking whether or not high-priority data have been generated in the application processing unit of the processor 110.

When high-priority data have been generated (Yes in S53), the terminal 100 transmits a transmission request (S53). For instance, the terminal 100 performs the following processing.

The group management unit 111 generates the transmission request and outputs the generated transmission request to the used resource control unit 112. Upon receipt of the transmission request, the used resource control unit 112 instructs the transmission control unit 113 to transmit the transmission request using the symbol of the transmission request region in the first half slot of a predetermined subframe on the PCRLICH. The transmission control unit 113 transmits the transmission request using the specified symbol of the PCRLICH. The transmission request is transmitted to the representative terminal among the plurality of terminals 100.

Next, the terminal 100 receives reordering information transmitted from the representative terminal (S54). For instance, the group management unit 111 receives the reordering information via the reception control unit 114 using the symbol of the reordering information region in the second half slot of the predetermined subframe of the PCRLICH.

Next, the terminal 100 performs transmission using a switched resource (S55). For instance, the terminal 100 executes the following processing.

The group management unit 111 switches the PSCCH resources in accordance with the reordering information and outputs the post-switching PSCCH allocation result to the used resource control unit 112. In accordance with the allocation result, the used resource control unit 112 instructs the transmission control unit 113 to transmit a control signal and the high-priority data, whereupon the transmission control unit 113 transmits the control signal and the high-priority data in response to the instruction. Examples of switching can be found in Fig. 12 and so on, for instance.

Returning to Fig. 20, next, the terminal 100 updates group information (S56). Upon receipt of the reordering information, the terminal 100 switches parts of the PSCCH and PSSCH resources. Accordingly, the group management unit 111 updates group information in which the identification information of the respective terminals 100 is associated with the PSCCH resources. The group management unit 111 stores the updated group information in the memory 120.

The terminal 100 then terminates the high-priority data transmission processing (S57).

When, on the other hand, high-priority data are not generated (S52), the terminal 100 transmits the control signal and data (S58) using the PSCCH and PSSCH resources allocated thereto during grouping (S51). The terminal 100 then terminates the high-priority data transmission processing (S57).

Note that an example operation performed by the representative terminal 100 that transmits the reordering information upon receipt of a transmission request from the terminal that is to transmit high-priority data is as follows, for instance.

Upon receiving a transmission request via the reception control unit 114, the group management unit 111 of the representative terminal 100 reads the reordering information, which is stored in the memory 120, from the memory 120. The group management unit 111 then instructs the used resource control unit 112 to transmit the read reordering information by groupcasting. The used resource control unit 112 instructs the transmission control unit 113 to transmit the reordering information using the symbol of the reordering information region in the second half slot of the same subframe of the PCRLICH as the subframe in which the transmission request was received. In response to the instruction, the transmission control unit 113 transmits the reordering information.

Example operations of the terminal 100 according to the first embodiment were described above. Hence, in the first embodiment, the terminal 100 allocates a total of N × $N_T$ PSCCH resources, having N (where N is an integer of 2 or more) resources in the frequency axis direction and $N_T$ (where $N_T$ is an integer of 2 or more) resources in the time axis direction, to the terminals 100.

In other words, the terminal 100 allocates the N frequency axis direction PSCCH resources in first place in the time axis direction to the terminals 100 (for instance, the terminals v1 to vN) as initial PSCCHs. Further, the terminal 100 allocates the second to the $N_T$-th time axis direction resources in first place in the frequency axis direction to the terminals 100 as repetition PSCCHs.

Furthermore, the terminal 100 allocates the second to the N-th frequency axis direction resources in second place in the time axis direction to the other terminals 100 (for instance, the terminals v(N + 1) to v(2N -1)) as initial PSCCHs. Moreover, the terminal 100 allocates the third to the $N_T$-th time axis direction resources in second place in the frequency axis direction to the other terminals 100 as repetition PSCCHs.

Thereafter, the terminal 100 repeats this operation so as to allocate PSCCH resources to the plurality of terminals 100 (the terminal v1 to the terminal v(N × (N + 1)/2), for instance).

The terminal 100 then transmits a control signal using the initial PSCCH allocated thereto and resends the control signal using the repetition PSCCH allocated thereto.

Thus, with the terminal 100 according to the first embodiment, all of the terminals 100 in a subgroup can enter the reception mode for at least one subframe period following the elapse of a predetermined period.

For instance, a control signal or data may be transmitted by selecting a resource at random from empty resources included in the selected window on the basis of the sensing result.

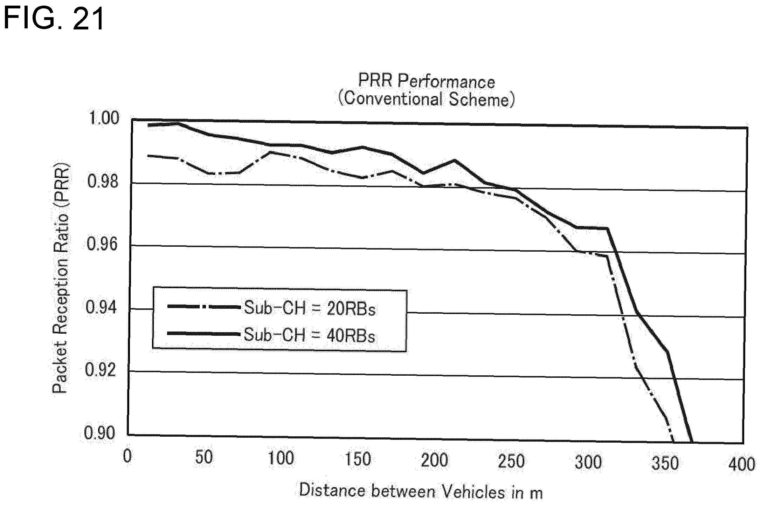

Fig. 21 illustrates a simulation result of the PRR in a case where this random resource selection method is used.

In Fig. 21, the vertical axis represents the PRR and the horizontal axis represents the distance (m) between terminals 100 (or vehicles). PRR = 1 indicates that the reception-side terminal 100 was able to receive all of the transmitted packets, for instance. Further, in Fig. 21, the solid line indicates a case in which one subchannel of the PSSCH includes 40 RBs, while the dot-dash line indicates a case in which one subchannel of the PSSCH includes 20 RBs.

As illustrated in Fig. 21, even when the distance between the terminals was close to "0", the PRR did not equal 1 with either 40 RBs or 20 RBs, and a result in which the PRR decreased to approximately "0.90" as the distance between the terminals lengthened was acquired.

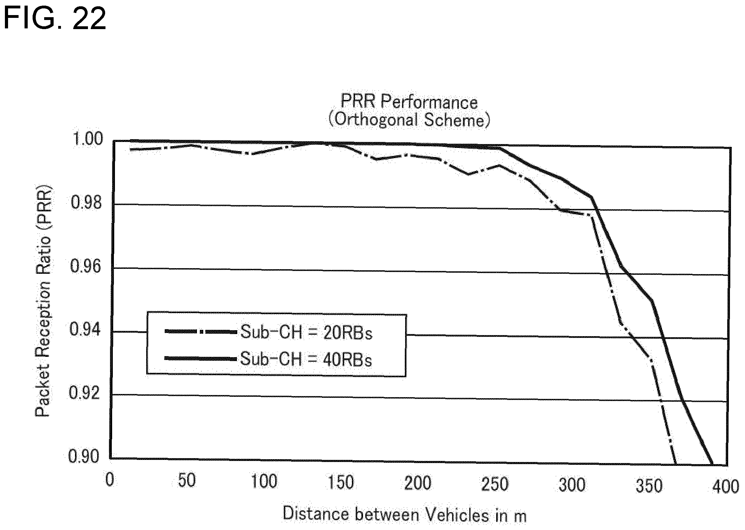

Fig. 22 illustrates a simulation result of the PRR in a case where reordering is performed using the PCRLICH without allocating and randomizing the PSCCHs as illustrated in Fig. 3.

As illustrated in Fig. 22, in the case of 40 RBs, PRR = 1 was attained when the distance between the terminals was no more than "200 m", but beyond "200m", the PRR decreases.

According to the first embodiment, however, by allocating the PSCCHs as illustrated in Fig. 3, all of the terminals 100 in a subgroup can enter the reception mode for at least one subframe period following the elapse of a predetermined period.

For instance, even in the first embodiment, a situation as illustrated in Fig. 26 may occur in a certain subframe period. In the following subframe period, however, the terminal 100 in the transmission mode may enter the reception mode so as to become capable of receiving data transmitted from another terminal 100. Following the elapse of a predetermined period, all of the terminals 100 enter the reception mode for at least one subframe period so as to become capable of receiving data transmitted from another terminal 100.

Following the elapse of a predetermined period, therefore, a situation in which the reception-side terminal 100 cannot receive data transmitted from another terminal can be avoided. As a result, the terminal 100 according to the first embodiment can prevent a reduction in the PRR.

[Other embodiments]

In the first embodiment described above, the PSCCH resource allocation illustrated in Fig. 3 is performed by a transmission-side terminal 100, for instance. For instance, in the transmission-side terminal, following the PSCCH resource allocation and randomization illustrated in Fig. 3, a control signal and data are transmitted using the allocated resources. In this case, the reception-side terminal 100 ascertains the used resources by sensing and receives the control signal transmitted from the transmission-side terminal using the PSCCH resource allocated thereto by the transmission-side terminal. Further, the reception-side terminal 100 ascertains the PSSCH resource allocated thereto by the transmission-side terminal from the SCI included in the control signal, and receives the data transmitted from the transmission-side terminal using this resource.

Furthermore, in the first embodiment described above, an example in which randomization is performed in the frequency axis direction first and then in the time axis direction was described. Instead, for instance, randomization may be performed in the time axis direction first and then in the frequency axis direction.

REFERENCE SIGNS LIST

10: wireless communication system
100 (100-1 to 100-4): terminal device (terminal)
110: processor
111: group management unit
112: used resource control unit
113: transmission control unit
114: reception control unit
120: memory
130: wireless communication unit
140: antenna
v1 to vN: terminal device (terminal)

**Claims**

1. A communication device comprising:

   a subgroup manager which, among a total of $N \times N_T$ resources of a control channel, the $N \times N_T$ resources having N (where N is an integer of 1 or more) resources in a frequency axis direction and $N_T$ (where $N_T$ is an integer of 2 or more) resources in a time axis direction, allocates N frequency axis direction resources in first place in the time axis direction to respective communication devices as resources of a first control channel, allocates second to $N_T$-th time axis direction resources in first place in the frequency axis direction to the respective communication devices as resources of a second control channel, allocates second to N-th frequency axis direction resources in second place in the time axis direction to respective other communication devices as resources of the first control channel, and allocates third to $N_T$-th time axis direction resources in second place in the frequency axis direction to the respective other communication devices as resources of the second control channel, and by repeating this operation, allocates the resources of the first and second control channels to a plurality of communication devices; and
   a transmission controller that transmits a control signal by using a resource of the first control channel and resends the control signal by using a resource of the second control channel.

2. The communication device according to claim 1, wherein $N_T$ is $N_T = N + 1$.

3. The communication device according to claim 2, wherein, when the number of the plurality of communication devices is set as M (where M is an integer of 2 or more), the subgroup manager determines the number of subgroups from the M and N, allocates the plurality of communication devices to the respective subgroups, and allocates the resources of the first and second control channels to the plurality of communication devices allocated to the respective subgroups.

4. The communication device according to claim 3, further comprising a memory,
   wherein the subgroup manager calculates the number L of subgroups by inserting the M and N into formula (1) below, which is stored in the memory:
   [Math. 1]

$$L = \left\lceil \frac{2M}{N \times (N+1)} \right\rceil \cdots \quad (1)$$

**5.** The communication device according to claim 1, wherein the subgroup manager switches the resources of the first and second control channels, allocated to the plurality of communication devices, at random in the frequency axis direction and the time axis direction.

**6.** The communication device according to claim 5, wherein the subgroup manager performs random switching in the frequency axis direction by switching the resources of the control channel at random in a same subframe period.

**7.** The communication device according to claim 5, wherein the subgroup manager performs random switching in the time axis direction by switching the resources of the control channel at random in units of the frequency axis direction resources allocated to a subframe period.

**8.** The communication device according to claim 7, wherein the subgroup manager performs random switching in the time axis direction while ensuring that a plurality of resources do not overlap in the same subframe period.

**9.** The communication device according to claim 5, wherein the subgroup manager switches resources of first and second data channels corresponding respectively to the first and second control channels in accordance with the switching of the resources of the first and second control channels.

**10.** The communication device according to claim 5, wherein the subgroup manager switches the resources of the first and second control channels, allocated to the plurality of communication devices, at random in the frequency axis direction and the time axis direction, and also switches the resources of the first and second control channels, allocated to the plurality of communication devices, in the time axis direction in accordance with reordering information generated by a representative communication device.

**11.** The communication device according to claim 10, further comprising a reception controller, wherein
when high-priority data are to be transmitted, the subgroup manager generates a transmission request,
the transmission controller transmits the transmission request by using a reordering control channel, and
the reception controller receives the reordering information transmitted from the representative communication device by using the reordering control channel.

**12.** The communication device according to claim 11, wherein
the transmission controller transmits the transmission request in a first half slot of a subframe period of the reordering control channel, and
the reception controller receives the reordering information in a second half slot of the subframe period.

**13.** The communication device according to claim 5, further comprising a reception controller that receives a transmission request by using a reordering control channel, wherein
in response to the transmission request, the subgroup manager generates reordering information used to switch the resources of the first and second control channels, allocated to the plurality of communication devices, in the time axis direction, and
the transmission controller transmits the reordering information by using the reordering control channel.

**14.** The communication device according to claim 1, wherein the subgroup manager divides the plurality of communication devices into first and second groups, each of which includes a plurality of subgroups, and in each of the first and second groups, allocates resources included in a resource pool of the control channel to the plurality of communication devices included respectively in the first and second groups.

**15.** The communication device according to claim 14, wherein the resource pool is shared by the plurality of communication devices included in the plurality of subgroups.

**16.** The communication device according to claim 14, wherein the first and second groups are respectively first and second V2X groups.

**17.** The communication device according to claim 1, wherein the control channel is a PSCCH.

**18.** A communication device comprising:

a wireless communicator that receives a wireless signal transmitted from another communication device; and

a reception controller which, among a total of N × N$_T$ resources of a control channel, the N × N$_T$ resources having N (where N is an integer of 1 or more) resources in a frequency axis direction and N$_T$ (where N$_T$ is an integer of 2 or more) resources in a time axis direction, allocates N frequency axis direction resources in first place in the time axis direction to respective communication devices as resources of a first control channel, allocates second to N$_T$-th time axis direction resources in first place in the frequency axis direction to the respective communication devices as resources of a second control channel, allocates second to N-th frequency axis direction resources in second place in the time axis direction to respective other communication devices as resources of the first control channel, and allocates third to N$_T$-th time axis direction resources in second place in the frequency axis direction to the respective other communication devices as resources of the second control channel, allocates the resources of the first and second control channels to a plurality of communication devices by repeating this operation, extracts a control signal transmitted by using the resource of the first control channel from the wireless signal, and extracts the control signal resent by using the resource of the second control channel from the wireless signal.

19. A communication system comprising first and second communication devices,
the first communication device including:

a subgroup manager which, among a total of N × N$_T$ resources of a control channel, the N × N$_T$ resources having N (where N is an integer of 1 or more) resources in a frequency axis direction and N$_T$ (where N$_T$ is an integer of 2 or more) resources in a time axis direction, allocates N frequency axis direction resources in first place in the time axis direction to respective communication devices as resources of a first control channel, allocates second to N$_T$-th time axis direction resources in first place in the frequency axis direction to the respective communication devices as resources of a second control channel, allocates second to N-th frequency axis direction resources in second place in the time axis direction to respective other communication devices as resources of the first control channel, and allocates third to N$_T$-th time axis direction resources in second place in the frequency axis direction to the respective other communication devices as resources of the second control channel, and by repeating this operation, allocates the resources of the first and second control channels to a plurality of communication devices; and
a transmission controller that transmits a control signal by using the resource of the first control channel and resends the control signal by using the resource of the second control channel, and
the second communication device including:
a reception controller that receives the control signal by using the resource of the first control channel and receives the resent control signal by using the resource of the second control channel.

EP 3 843 470 A1

# FIG. 1

100-v1
(100-1)

100-v3
(100-3)

100-v2
(100-2)

100-v4
(100-4)

WIRELESS COMMUNICATION SYSTEM
(OR COMMUNICATION SYSTEM)10

22

FIG. 2

TERMINAL DEVICE (COMMUNICATION DEVICE)   100

PROCESSOR   110

USED RESOURCE CONTROL UNIT   112

TRANSMISSION CONTROL UNIT   113

GROUP MANAGEMENT UNIT   111

SUBGROUP MANAGEMENT UNIT   1110

RECEPTION CONTROL UNIT   114

WIRELESS COMMUNICATION UNIT   130

140

MEMORY   120

EP 3 843 470 A1

# FIG. 3

Time

Frequency

← (N +1) Subchannels (PSCCH) in Time Domain →

N Subchannels (PSCCH) in Frequency

| v1 | v1 | v2 | v3 |
|----|----|----|----|
| v2 | v(N+1) | v(N+1) | v(N+2) |
| v3 | v(N+2) | v(2N) | v(2N) |
| v4 | v(N+3) | v(2N+1) | v(3N-2) |

| v(N-1) | vN |
|--------|----|
| v(2N-2) | v(2N-1) |
| v(3N-4) | v(3N-3) |
| v(4N-7) | v(4N-6) |

2RB

...

⋱

|← Subframe →|

| vN | v(2N-1) | v(3N-3) | v(4N-6) |
|----|---------|---------|---------|

| $v(\frac{N \times (N+1)}{2})$ | $v(\frac{N \times (N+1)}{2})$ |
|---|---|

FIG. 4

FIG. 5A

[N=2: Support ≤ 3 UEs]

Time →

| | SF1 | SF2 | SF3 |
|---|---|---|---|
| | v1 | v1 | v2 |
| | v2 | v3 | v3 |

Frequency ↓

FIG. 5B

[N=3: Support ≤ 6 UEs]

Time →

| | SF1 | SF2 | SF3 | SF4 |
|---|---|---|---|---|
| | v1 | v1 | v2 | v3 |
| | v2 | v4 | v4 | v5 |
| | v3 | v5 | v6 | v6 |

Frequency ↓

FIG. 6

[N=4: Support ≤ 10 UEs]

Time →

Frequency ↓

| v1 | v1 | v2 | v3 | v4 |
|---|---|---|---|---|
| v2 | v5 | v5 | v6 | v7 |
| v3 | v6 | v8 | v8 | v9 |
| v4 | v7 | v9 | v10 | v10 |
| SF1 | SF2 | SF3 | SF4 | SF5 |

## FIG. 7A

| | Subgroup#1 | | | Subgroup#2 | | | Subgroup#3 | |
|---|---|---|---|---|---|---|---|---|
| v1 | v1 | v2 | v4 | v4 | v5 | v6 | v6 | v7 |
| v2 | v3 | v3 | v5 | | | v7 | | |
| SF1 | SF2 | SF3 | SF4 | SF5 | SF6 | SF7 | SF8 | SF9 |

V2X Group

## FIG. 7B

| | Subgroup#1 | | | Subgroup#2 | | | Subgroup#3 | |
|---|---|---|---|---|---|---|---|---|
| v1 | v3 | v2 | v4 | v4 | v5 | v7 | | |
| v2 | v1 | v3 | v5 | | | v6 | v6 | v7 |
| SF1 | SF2 | SF3 | SF4 | SF5 | SF6 | SF7 | SF8 | SF9 |

V2X Group

EP 3 843 470 A1

FIG. 8A

| | Subgroup#1 | | | Subgroup#2 | | | Subgroup#3 | |
|---|---|---|---|---|---|---|---|---|
| SF1 | SF2 | SF3 | SF4 | SF5 | SF6 | SF7 | SF8 | SF9 |
| v1 | v3 | v2 | v4 | v4 | v5 | v7 | | |
| v2 | v1 | v3 | v5 | | | v6 | v6 | v7 |

| v1 | v5 | v7 | v2 | Idle | v3 | v4 | Idle | v4 |
|---|---|---|---|---|---|---|---|---|
| v2 | Idle | v6 | v3 | v6 | v1 | Idle | v7 | v5 |
| SF1 | SF2 | SF3 | SF4 | SF5 | SF6 | SF7 | SF8 | SF9 |

V2X Group

FIG. 8B

EP 3 843 470 A1

# FIG. 9

Sporadic Packet Arrives in V1 (S10)

2 RBs

Subchannel

PSCCH

PSSCH

| | SF1 | SF2 | SF3 | SF4 | SF5 | SF6 | SF7 | SF8 | SF9 |
|---|---|---|---|---|---|---|---|---|---|
| | v1 | v5 | v7 | v2 | Idle | v3 | v4 | Idle | v4 |
| | v2 | Idle | v6 | v3 | v6 | v1 | Idle | v7 | v5 |

## FIG. 10

| | SF1 | SF2 | SF3 | SF4 | SF5 | SF6 | SF7 | SF8 | SF9 | |
|---|---|---|---|---|---|---|---|---|---|---|
| PSCCH | v1 | v5 | v7 | v2 | *Idle* | v3 | v4 | *Idle* | v4 | 2 RBs |
| | v2 | *Idle* | v6 | v3 | v6 | v1 | *Idle* | v7 | v5 | |
| PSSCH | | | | | | | | | | Subchannel |

Sporadic Packet Arrives in V1 (S10)

V1 Requests High Priority (S11)

EP 3 843 470 A1

# FIG. 11

EP 3 843 470 A1

Sporadic Packet Arrives in V1 (S10)

V1 Requests High Priority (S11)

V6 Sends Re-order: SF3 ⇔ SF5  &  SF4 ⇔ SF7 (S12)

| | SF1 | SF2 | SF3 | SF4 | SF5 | SF6 | SF7 | SF8 | SF9 | |
|---|---|---|---|---|---|---|---|---|---|---|
| | v1 | v5 | v7 | v2 | *Idle* | v3 | v4 | *Idle* | v4 | 2 RBs |
| | v2 | *Idle* | v6 | v3 | v6 | v1 | *Idle* | v7 | v5 | |
| | | | | | | | | | | Subchannel |
| | | | | | | | | | | |

## FIG. 12

V1 Requests High Priority (S11)
V6 Sends Re-order: SF3 ⇔ SF5 & SF4 ⇔ SF7 (S12)
(S14)
Sporadic Packet Arrives in V1 (S10)

| | SF1 | SF2 | SF3 | SF4 | SF5 | SF6 | SF7 | SF8 | SF9 | |
|---|---|---|---|---|---|---|---|---|---|---|
| PSCCH | v1 | v5 | *Idle* | v4 | v7 | v3 | v2 | *Idle* | v4 | 2 RBs |
| | v2 | *Idle* | v6 | *Idle* | v6 | v1 | v3 | v7 | v5 | |
| PSSCH | | | | | | | | | | Subchannel |
| | | | | | | | | | | |

(S13)

EP 3 843 470 A1

# FIG. 13

EP 3 843 470 A1

V1 Requests | V6 Sends
High Priority | Re-order: SF3 ⇔ SF5 & SF4 ⇔ SF7

Sporadic Packet ↑(S11)  (S12)
Arrives in V1
(S10)

| | SF1 | SF2 | SF3 | SF4 | SF5 | SF6 | SF7 | SF8 | SF9 | |
|---|---|---|---|---|---|---|---|---|---|---|
| PSCCH | v1 | v5 | v1 | v4 | v7 | v3 | v2 | *Idle* | v4 | 2 RBs |
| | v2 | *Idle* | v6 | v1 | v6 | v1 | v3 | v7 | v5 | |
| | | | (S15) | (S16) | | | | | | Subchannel |
| PSSCH | | | Sporadic Packet (Initial) | Sporadic Packet (Repetition) | | | | | | |

# FIG. 14

| | SF1 | SF2 | SF3 | SF4 | SF5 | SF6 | SF7 | SF8 | SF9 | |
|---|---|---|---|---|---|---|---|---|---|---|
| PSCCH | v1 | v5 | *Idle* | v4 | v7 | v3 | v2 | *Idle* | v4 | 2 RBs |
| | v2 | *Idle* | v6 | *Idle* | v6 | v1 | v3 | v7 | v5 | |
| | | | (S17) | (S18) | | | | | | Subchannel |
| PSSCH | | | | | | | | | | |
| | | | | | | | | | | |

EP 3 843 470 A1

# FIG. 15A

Time →

Frequency ↓

PCRLICH

PSCCH

PSSCH

# FIG. 15B

| AGC | TRANSMISSION REQUEST | DMRS | TRANSMISSION REQUEST | DMRS | TRANSMISSION REQUEST | GUARD INTERVAL | AGC | REORDERING INFORMATION | DMRS | REORDERING INFORMATION | DMRS | REORDERING INFORMATION | GUARD INTERVAL |

SLOT#1

SLOT#2

# FIG. 16

V2X Group#1 — V2X Group#2 — V2X Group# $\frac{P}{2}$

Vehicles in $SG_1$ · Vehicles in $SG_2$ · Vehicles in $SG_3$ · Vehicles in $SG_4$ · Vehicles in $SG_P$

$M_1$ · $M_2$ · $M_3$ · $M_4$ · $M_p$

$V_{11}$ · $V_{11}$ · $V_{12}$ · $V_{13}$ · $V_{21}$ · $V_{21}$ · $V_{22}$ · $V_{23}$

$V_{12}$ · $V_{22}$

$V_{13}$ · $V_{1M_1}$ · $V_{1M_1}$ · $V_{23}$ · $V_{2M_2}$ · $V_{2M_2}$

V2X Group#1 in Resource Pool #1, with Randomization

$V_{31}$ · $V_{31}$ · $V_{32}$ · $V_{33}$ · $V_{41}$ · $V_{41}$ · $V_{42}$ · $V_{43}$

$V_{32}$ · $V_{42}$

$V_{33}$ · $V_{3M_3}$ · $V_{3M_3}$ · $V_{43}$ · $V_{4M_4}$ · $V_{4M_4}$

V2X Group#2 in Resource Pool #2, with Randomization

EP 3 843 470 A1

FIG. 17A

| | Subgroup#1 | | | Subgroup#2 | | | Subgroup#3 | |
|---|---|---|---|---|---|---|---|---|
| SF1 | SF2 | SF3 | SF4 | SF5 | SF6 | SF7 | SF8 | SF9 |
| v1 | v1 | v2 | v3 | v3 | v4 | v3 | v3 | v5 |
| v2 | v3 | v3 | v4 | | | v5 | | |

| v3 | v3 | v4 | v3 | v3 | Idle | v3 | v3 | v1 |
|---|---|---|---|---|---|---|---|---|
| v2 | v1 | Idle | v4 | Idle | v5 | v5 | Idle | v2 |
| SF1 | SF2 | SF3 | SF4 | SF5 | SF6 | SF7 | SF8 | SF9 |

|← V2X Group →|

FIG. 17B

FIG. 18A

| Subgroup#1 | | | Subgroup#2 | | | Subgroup#3 | | |
|---|---|---|---|---|---|---|---|---|
| SF1 | SF2 | SF3 | SF4 | SF5 | SF6 | SF7 | SF8 | SF9 |
| v1 | v1 | v2 | v3 | v3 | v4 | v3 | v3 | v5 |
| v2 | v3 | v3 | v4 | | | v5 | | |

| v3 | v1 | v3 | v5 | Idle | v3 | v2 | Idle | v4 |
|---|---|---|---|---|---|---|---|---|
| v1 | v2 | Idle | v3 | v5 | v4 | v3 | v3 | Idle |
| SF1 | SF2 | SF3 | SF4 | SF5 | SF6 | SF7 | SF8 | SF9 |

V2X Group

FIG. 18B

EP 3 843 470 A1

# FIG. 19

```
        ┌──────────────────────────────┐
        │            START             │ ～ S30
        └──────────────────────────────┘
                       │
                       ▼
  ┌────────────────────────────────────────┐
  │ SUBGROUPING (DETERMINE NUMBER L          │
  │ OF SUBGROUPS FROM NUMBER N OF            │ ～ S31
  │ PSCCHs IN FREQUENCY DOMAIN AND           │
  │ NUMBER M OF UEs IN V2X GROUP)            │
  └────────────────────────────────────────┘
                       │
                       ▼
  ┌────────────────────────────────────────┐
  │ ALLOCATE PSCCH RESOURCES IN EACH         │ ～ S32
  │              SUBGROUP                    │
  └────────────────────────────────────────┘
                       │
                       ▼
  ┌────────────────────────────────────────┐
  │      RANDOMIZATION IN V2X GROUP          │ ～ S33
  └────────────────────────────────────────┘
                       │
                       ▼
        ┌──────────────────────────────┐
        │             END              │ ～ S34
        └──────────────────────────────┘
```

FIG. 20

```
┌─────────────────────────┐
│         START           │ ～ S50
└─────────────────────────┘
            │
            ▼
┌─────────────────────────┐
│        GROUPING         │ ～ S51
└─────────────────────────┘
            │
            ▼
         ╱───────────╲  ～ S52        No
      ╱─── HIGH-PRIORITY DATA ───╲──────────────────┐
      ╲    GENERATED?    ╱                           │
         ╲───────────╱                               │
            │ Yes        ～ S53                       │  ～ S58
            ▼                                         ▼
┌─────────────────────────┐          ┌─────────────────────────┐
│  TRANSMIT TRANSMISSION  │          │  TRANSMIT USING ALLOCATED │
│        REQUEST          │          │        RESOURCE          │
└─────────────────────────┘          └─────────────────────────┘
            │                                         │
            ▼                                         │
┌─────────────────────────┐ ～ S54                    │
│   RECEIVE REORDERING    │                           │
│      INFORMATION        │                           │
└─────────────────────────┘                           │
            │                                         │
            ▼                                         │
┌─────────────────────────┐ ～ S55                    │
│  TRANSMIT USING SWITCHED │                          │
│        RESOURCE         │                           │
└─────────────────────────┘                           │
            │                                         │
            ▼                                         │
┌─────────────────────────┐ ～ S56                    │
│  UPDATE GROUP INFORMATION │                         │
└─────────────────────────┘                           │
            │                                         │
            ▼◄────────────────────────────────────────┘
┌─────────────────────────┐
│          END            │ ～ S57
└─────────────────────────┘
```

# FIG. 21

PRR Performance
(Conventional Scheme)

Sub-CH = 20RBs
Sub-CH = 40RBs

Packet Reception Ratio (PRR)

Distance between Vehicles in m

EP 3 843 470 A1

# FIG. 22

PRR Performance
(Orthogonal Scheme)

Sub-CH = 20RBs
Sub-CH = 40RBs

Packet Reception Ratio (PRR)

Distance between Vehicles in m

EP 3 843 470 A1

# FIG. 23

Adjacent
PSCCH+PSSCH Scheme

Time

Frequency

PSCCH

PSSCH

2RBs

n RBs

Subchannel

Subframe

# FIG. 24

Time

Frequency

Nonadjacent
PSCCH+PSSCH Scheme

2RBs

PSCCH

PSSCH

n RBs

# FIG. 25

Time

Sensing Period (1s)

**Selected Window**

Frequency

PSCCH

PSSCH

Subchannel

Subframes (1ms)

T

**Latency Deadline**

EP 3 843 470 A1

FIG. 26

EP 3 843 470 A1

<div style="text-align:center">**INTERNATIONAL SEARCH REPORT**</div>

| International application No. |
|---|
| PCT/JP2018/030713 |

A. CLASSIFICATION OF SUBJECT MATTER
Int. Cl. H04W72/04(2009.01)i, H04W4/44(2018.01)i

According to International Patent Classification (IPC) or to both national classification and IPC

B. FIELDS SEARCHED

Minimum documentation searched (classification system followed by classification symbols)
Int. Cl. H04B7/24-7/26, H04W4/00-99/00

Documentation searched other than minimum documentation to the extent that such documents are included in the fields searched
Published examined utility model applications of Japan    1922-1996
Published unexamined utility model applications of Japan  1971-2018
Registered utility model specifications of Japan          1996-2018
Published registered utility model applications of Japan  1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | US 2017/0223711 A1 (ZTE CORPORATION) 03 August 2017, paragraphs [0106], [0119], [0122], [0127], [0128], fig. 16, 18 & WO 2015/154524 A1 & CN 105338637 A | 1, 2, 18, 19<br>3, 14-17<br>4-13 |
| X<br>Y<br>A | ZTE, SA Pattern Design, 3GPP TSG-RAN WG1 #78 R1-143136, 3GPP, 10 August 2014, section 2 | 1, 2, 18, 19<br>3, 14-17<br>4-13 |
| Y | JP 2014-529952 A (SCA IPLA HOLDINGS INC.) 13 November 2014, paragraph [0153] & US 2014/0161016 A1, paragraph [0175] & US 2017/0164329 A1 & GB 2493917 A & WO 2013/027019 A1 & CN 103797745 A | 3, 14-16 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04.10.2018 | 23.10.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

INTERNATIONAL SEARCH REPORT

| | International application No. |
|---|---|
| | PCT/JP2018/030713 |

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2017/126266 A1 (NEC CORPORATION) 27 July 2017, paragraph [0122], fig. 1B (Family: none) | 16 |
| Y | ZTE, Scheduling Assignment enhancement for V2V, 3GPP TSG-RAN WG1 #84 R1-160683, 3GPP, 06 February 2016, section 2.1 | 17 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TR 38.801 V14.0.0,* April 2017
- *3GPP TR 38.802 V14.2.0,* September 2017
- *3GPP TR 38.803 V14.2.0,* September 2017
- *3GPP TR 38.804 V14.0.0,* March 2017
- *3GPP TR 38.900 V14.3.1,* July 2017
- *3GPP TR 38.912 V14.1.0,* June 2017
- *3GPP TR 38.913 V14.3.0,* June 2017
- *3GPP TR 37.885 V15.0.0,* June 2018
- *3GPP TR 22.886 V15.1.0,* March 2017

- Status Report for RAN WG1 to TSG-RAN #80. *3GPP TSG RAN #80, RP-180602,* 11 June 2018
- New SID: Study on NR V2X. *3GPP TSG RAN #80, RP-181429,* 11 June 2018
- **R. M. MASEGOSA ; J. GOZALVEZ.** LTE-V for Side-link 5G V2X Vehicular Communications: A New 5G Technology for Short-Range Vehicle-to-Everything Communications. *IEEE Vehicular Technology Magazine,* December 2017, vol. 2 (4), 30-39